# EUROPEAN PATENT APPLICATION

(11) **EP 1 408 414 A1**
(43) Date of publication of application: **14.04.2004**
(21) Application number: 02745964.3
(22) Date of filing: 11.07.2002
(51) Int. Cl.: G06F 13/00, G06F 17/30, G06F 17/60

(54) **INFORMATION DELIVERY SERVER, RECORDING MEDIUM, AND INFORMATION DELIVERY METHOD**

(30) Priority: 13.07.2001 JP 2001214434; 07.02.2002 JP 2002031532
(71) Applicant: Sony Corporation, Tokyo 141-0001 (JP); Toppan Printing Co., Ltd., Taito-ku, Tokyo 110-0016 (JP)
(72) Inventor: SUGIMOTO, Michitoshi, c/o Sony Corporation, Tokyo 141-0001 (JP); YABUSAKI, Masami, c/o Sony Corporation, Tokyo 141-0001 (JP); OGURA, Masatoshi, c/o Toppan Printing Co., Ltd., Tokyo 110-0016 (JP); WATANABE, Hitoshi, c/o Toppan Printing Co., Ltd., Tokyo 110-0016 (JP); NODA, Maiko, c/o Toppan Printing Co., Ltd., Tokyo 110-0016 (JP)
(74) Representative: Maury, Richard Philip
(86) International application number: PCT/JP2002/007052
(87) International publication number: WO 2003/007161

(57) **Abstract**

The objective of the present invention is to provide an information distribution server which can distribute individual information for distribution, according to the position of a person who is visiting. The present invention includes: a device for obtaining the ID of a person who is visiting, which is provided within a work area, and which obtains an ID of the person who is visiting, which is information for discriminating the person who is visiting, and appends a position ID which has been set to itself to the ID of the person who is visiting which has been obtained, and dispatches it; a signal destination information database which, in the information distribution system which includes the information distribution server which is connected to the device for obtaining the ID of a person who is visiting, establishes a correspondence between signal destination information which specifies a portable terminal which is to become the object of distribution of contents, and the ID of the person who is visiting, and stores it; a signal reception means which receives as position information the ID of the person who is visiting and the position ID which are dispatched from the device for obtaining the ID of a person who is visiting; and a means which reads out contents reads out contents [sic] from a contents database which correspond to the position ID which is included in the position information which the signal reception means receives, and dispatches the contents which have been read out to the signal destination information which corresponds to the ID of the person who is visiting which is included in the position information.

## Description

### BACKGROUND OF THE INVENTION

### Field of the Invention

This invention is one which relates to an information distribution system which distributes information according to the positions of persons who visit an enterprise.

### Description of the Related Art

For a compound business facility in which a plurality of enterprises such as restaurants, cinemas, goods sales outlets and the like are collected together, it is known to perform guiding to each enterprise within the compound business facility for persons who visit. This guiding is performed, for example, by distributing paper handouts or pamphlets, by posting signs, or the like.

Persons who visit this compound business facility take advantage of these guides or distributed materials or the like for roaming the compound business facility according to their own desires, to purchase goods, and to receive services.

However, with the above-described method of guidance, the guide information is presented to all the persons who visit within the facility, and it has been difficult to present individualized information to the persons who visit. Furthermore, if posting of signs is utilized, the persons who visit have only been able, in the same place, to obtain information with the same contents.

The present invention has been conceived of in the light of this type of circumstance, and its objective is to provide an information distribution server, which can distribute individualized information for distribution according to the positions of persons who are visiting.

Furthermore, another objective of the present invention is to provide an information distribution system, which is able to distribute information for distribution according to the history of the path which persons who visit have pursued.

### SUMMARY OF THE INVENTION

In order to implement the above described objectives, the present invention is an information distribution server which is used in an information distribution system which comprises a device for obtaining the ID of a person who is visiting, which obtains an ID of the person who is visiting, which is information for discriminating the person who is visiting, and appends a position ID which is set to itself to the ID of the person who is visiting which has been obtained and dispatches it, and the information distribution server which is connected to said device for obtaining the ID of a person who is visiting, characterized by comprising: a contents database which stores contents in correspondence to position ID; a signal destination information database which establishes a correspondence between signal destination information, which is information for specifying a portable terminal which is to become the object of distribution of said contents, and said ID of the person who is visiting, and stores it as registration information; a signal reception means which receives as position information said ID of the person who is visiting and said position ID which are dispatched from said device for obtaining the ID of a person who is visiting; a contents reading out means which reads out contents from said contents database which correspond to the position ID which is included in said position information which said signal reception means receives; and a distribution means which reads out from a signal destination information database signal destination information which corresponds to said ID of the person who is visiting which is included in said position information, and dispatches said contents which have been read out by said contents reading out means based upon said signal destination information which has been read out.

Furthermore, the present invention is an information distribution server in an information distribution system which comprises a device for obtaining the ID of a person who is visiting, which obtains an ID of the person who is visiting, which is information for discriminating the person who is visiting, and appends a position ID which is set to itself to the ID of the person who is visiting which has been obtained and dispatches it, a signal reception device which is provided within one or a plurality of enterprises and receives contents and outputs them, and the information distribution server which distributes said contents, characterized by comprising: a contents database which stores contents in correspondence to position ID; a signal destination information database which establishes a correspondence between signal destination information, which is information for specifying said signal reception device which is to become the object of distribution of said contents, and said position ID, and stores it; a signal reception means which receives as position information said ID of the person who is visiting and said position ID which are dispatched from said device for obtaining the ID of a person who is visiting; a contents reading out means which reads out contents from said contents database which correspond to the position ID which is included in said position information which said signal reception means receives; and a distribution means which reads out from said signal destination information database signal destination information which corresponds to said position ID which is included in said position information, and dispatches said contents which have been read out by said contents reading out means based upon said signal destination information which has been read out.

Furthermore, the present invention is an information distribution server in an information distribution system which comprises a portable terminal which is carried by a person who is visiting, a device for obtaining the ID of a person who is visiting, which obtains an ID of the person who is visiting, which is said information for discriminating the person who is visiting, and appends a position ID which is set to itself to the ID of the person who is visiting which has been obtained and dispatches it, a signal reception device which is provided within one or a plurality of enterprises and which receives contents and outputs them, and the information distribution server which distributes said contents, characterized by comprising: a contents database which stores, in correspondence to said position ID, contents for use by a signal reception device, for dispatch to said signal reception device, and contents for use by a portable terminal, for dispatch to said portable terminal, which have relevance relative to said contents for use by a signal reception device; a signal destination information database which, along with establishing a correspondence between signal destination information of a signal reception device, which is information for specifying said signal reception device which is to become the object of distribution of said contents, and said position ID, and storing it, also establishes a correspondence between signal destination information of a portable terminal, which is information for specifying said portable terminal which is to become the object of distribution of said contents, and said ID of the person who is visiting, and stores it; a signal reception means which receives as position information said ID of the person who is visiting and said position ID which are dispatched from said device for obtaining the ID of a person who is visiting; and a means for reading out contents, which reads out from said contents database contents for use by a signal reception device and contents for use by a portable terminal which correspond to the position ID which is included in said position information which said signal reception means receives; and a distribution means which, along with reading out from a signal destination information database signal destination information of a signal reception device which corresponds to said position ID which is included in said position information, and dispatching said contents for use by a signal reception device which have been read out by said contents reading out means based upon said signal destination information of said signal reception device which has been read out, also reads out from a signal destination information database signal destination information of a portable terminal which corresponds to said ID of the person who is visiting which is included in said position information, and dispatches said contents for use by a portable terminal which have been read out by said contents reading out means based upon said signal destination information of said portable terminal which has been read out.

Furthermore, according to the present invention, the above described information distribution server is characterized in that: category information which specifies a category of the person who is visiting and is carrying said portable terminal is set in said ID of the person who is visiting; distribution category information is further set in advance in said contents which designates a category of the object of distribution; and said distribution means, when distributing said contents, distributes information for distribution to the portable terminal for which has been set signal destination information for which category information is set which corresponds to the distribution category information which has been set in said information for distribution.

Further, the present invention is an information distribution server which is used in an information distribution system which comprises a device for obtaining the ID of a person who is visiting, which obtains an ID of the person who is visiting, which is information for discriminating the person who is visiting, and the information distribution server which is connected to said device for obtaining the ID of a person who is visiting, characterized by comprising: a contents database which stores contents for which distribution category information which designates a category of the object for distribution has been set in advance; a signal destination information database which establishes a correspondence between signal destination information, which is information for specifying a portable terminal which is carried by the person who is visiting and is to become the object of distribution of said contents, category information which specifies a category of the person who is visiting and is carrying said portable terminal, and said ID of the person who is visiting, and stores it; a signal reception means which, if a recording medium upon which said ID of the person who is visiting is stored is approached by said person who is visiting to within a region in which reading in by said device for obtaining the ID of a person who is visiting is possible, receives from said device for obtaining the ID of a person who is visiting the ID of the person who is visiting which is obtained by said device for obtaining the ID of a person who is visiting; a contents reading out means which reads out signal destination information and category information which correspond to the ID of the person who is visiting which is received by said signal reception means, and reads out contents from said contents database in which distribution category information has been set which corresponds to the category information which has been read out; and a distribution means which dispatches said contents which have been read out to the portable terminal for which said signal destination information which has been read out is set.

Furthermore, according to the present invention, the above described information distribution server is characterized by comprising: a user profile database which stores position information which said signal reception means receives; and a management console means which receives information which indicates that a specified service within a facility has been utilized, and an ID of a person who is visiting and has utilized said service, via said signal reception means as utilization information, and stores said utilization information in a user profile database in correspondence to position information, based upon said ID of the person who is visiting; and in that said management console means further, when it has received position information, detects from said user profile database whether or not a service is already being utilized, based upon said position information which it has received, and, if a service is already being utilized, performs control so as not to dispatch said contents.

Furthermore, the present invention is an information distribution server in an information distribution system in which are provided a plurality of said devices for obtaining the ID of a person who is visiting, and an information distribution server which distributes contents, characterized in that: said information distribution server is the information distribution server of any one of Claim 1 through Claim 6; and said contents reading out means reads out contents from said contents database which correspond to a history of position information which is stored in said user profile database, based upon an action rule for determining contents to be distributed according to a profile of position information.

Furthermore, according to the present invention, the above described information distribution server is characterized in that: in the position information which is dispatched from the device for obtaining the ID of a person who is visiting, there is included time instant information which indicates the time instant at which said ID of the person who is visiting has been obtained; and said contents reading out means reads out contents from said contents database corresponding to a history of position information which is stored in said user profile database, based upon an action rule for determining contents to be distributed according to a history of position information and the present time instant, or an action rule for determining contents to be distributed according to the passage of time from a time instant that an ID of a person who is visiting has been registered until the present time instant, and said position information.

Furthermore, according to the present invention, the above described information distribution server is characterized in that said contents is information for performing guiding within a facility.

Furthermore, according to the present invention, the above described information distribution server is characterized in that said contents is information which can be transferred electronically.

Furthermore, according to the present invention, the above described information distribution server is characterized in that said information which can be transferred electronically includes at least one of amusement information, a moving image, a game, a program, an electronic coupon, and a ticket.

Furthermore, the present invention is a recording medium which is used in an information distribution system as described in Claim 1 through Claim 11, and upon which is stored the ID of a person who is visiting, characterized in that: said recording medium provides the ID of the person who is visiting to said device for obtaining the ID of a person who is visiting.

Furthermore, the present invention is characterized in that said recording medium is an RFID tag.

Furthermore, the present invention is an information distribution method for an information distribution system which comprises a device for obtaining the ID of a person who is visiting, which obtains an ID of the person who is visiting, which is information for discriminating the person who is visiting, and appends a position ID which is set to itself to the ID of the person who is visiting which has been obtained and dispatches it, and the information distribution server which is connected to said device for obtaining the ID of a person who is visiting, characterized in that: said ID of the person who is visiting and said position ID which are dispatched from said device for obtaining the ID of a person who is visiting are received as position information; contents, which correspond to the position ID which is included in said position information which is received, are read out from a contents database in which contents are stored in correspondence to position ID; and signal destination information which corresponds to said ID of the person who is visiting which is included in said position information is read out from a signal destination information database, and said contents which have been read out are dispatched to the signal destination information which has been read out.

Furthermore, the present invention is an information distribution method for an information distribution system which comprises a device for obtaining the ID of a person who is visiting, which obtains an ID of the person who is visiting, which is information for discriminating the person who is visiting, and appends a position ID which is set to itself to the ID of the person who is visiting which has been obtained and dispatches it, a signal reception device which is provided within one or a plurality of enterprises and which receives contents and outputs them, and the information distribution server which distributes said contents, characterized in that:
said ID of the person who is visiting and said position ID which are dispatched from said device for obtaining the ID of a person who is visiting are received as position information and a history of position information is created; contents, which correspond to said history of position information which has been created, are read out from a contents database, based upon an action rule for determining contents which are to be distributed according to a profile of said position information; and signal destination information, which corresponds to said ID of the person who is visiting which is included in said position information, is read out from a signal destination information database which stores signal destination information, which is information for specifying said signal reception device, and the contents which have been read out are dispatched to the signal destination information which has been read out.

Furthermore, the present invention is a recording medium which can be read in by a computer, on which is recorded an information distribution program for an information distribution system which comprises a device for obtaining the ID of a person who is visiting, which obtains an ID of the person who is visiting, which is information for discriminating the person who is visiting, and appends a position ID which is set to itself to the ID of the person who is visiting which has been obtained and dispatches it, and an information distribution server which is connected to said device for obtaining the ID of a person who is visiting, for causing a computer to execute: a receiving step of receiving said ID of the person who is visiting and said position ID which are dispatched from said device for obtaining the ID of a person who is visiting as position information; a step of reading out contents, which correspond to the position ID which is included in said position information which has been received, from a contents database; and a step of reading out signal destination information which corresponds to said ID of the person who is visiting which is included in said position information from a signal destination information database, and dispatching said contents which have been read out to the signal destination information which has been read out.

Furthermore, the present invention is a recording medium on which is recorded an information distribution program for an information distribution system which comprises a device for obtaining the ID of a person who is visiting, which obtains an ID of the person who is visiting, which is information for discriminating the person who is visiting, and appends a position ID which is set to itself to the ID of the person who is visiting which has been obtained and dispatches it, a signal reception device which is provided within one or a plurality of enterprises and which receives contents and outputs them, and an information distribution server which distributes said contents, for causing a computer to execute: a step of receiving said ID of the person who is visiting and said position ID which are dispatched from said device for obtaining the ID of a person who is visiting as position information, and of creating a history of position information; a step of reading out contents, which correspond to said history of position information which has been created, from a contents database, based upon an action rule for determining contents which are to be distributed according to a history of said position information; and a step of reading out signal destination information, which corresponds to said ID of the person who is visiting which is included in said position information, from a signal destination information database, and of dispatching the contents which have been read out to the signal destination information which has been read out.

Furthermore, the present invention is an information distribution program for an information distribution system which comprises a device for obtaining the ID of a person who is visiting, which obtains an ID of the person who is visiting, which is information for discriminating the person who is visiting, and appends a position ID which is set to itself to the ID of the person who is visiting which has been obtained and dispatches it, and an information distribution server which is connected to said device for obtaining the ID of a person who is visiting, for causing a computer to execute: a receiving step of receiving said ID of the person who is visiting and said position ID which are dispatched from said device for obtaining the ID of a person who is visiting as position information; a step of reading out contents, which correspond to the position ID which is included in said position information which has been received, from a contents database; and a step of reading out signal destination information which corresponds to said ID of the person who is visiting which is included in said position information from a signal destination information database, and dispatching said contents which have been read out to the signal destination information which has been read out.

Furthermore, the present invention is an information distribution program for an information distribution system which comprises a device for obtaining the ID of a person who is visiting, which obtains an ID of the person who is visiting, which is information for discriminating the person who is visiting, and appends a position ID which is set to itself to the ID of the person who is visiting which has been obtained and dispatches it, a signal reception device which is provided within one or a plurality of enterprises and which receives contents and outputs them, and an information distribution server which distributes said contents, for causing a computer to execute: a step of receiving said ID of the person who is visiting and said position ID which are dispatched from said device for obtaining the ID of a person who is visiting as position information, and of creating a history of position information; a step of reading out contents, which correspond to said history of position information which has been created, from a contents database, based upon an action rule for determining contents which are to be distributed according to a history of said position information; and a step of reading out signal destination information, which corresponds to said ID of the person who is visiting which is included in said position information, from a signal destination information database, and of dispatching the contents which have been read out to the signal destination information which has been read out.

### BRIEF DESCRIPTION OF THE DRAWINGS

FIG. 1 is a schematic block diagram showing the structure of an information distribution system according to an embodiment of this invention.
FIG. 2 is a schematic block diagram showing the structure of an information distribution server 1.
FIG. 3 is a figure for explanation of the mechanism by which an action rule determines contents.
FIG. 4 is a figure for explanation of the operation of an information distribution system 10.
FIG. 5 is a figure for explanation of a case in which contents are distributed to a signal reception device and to a portable terminal.
FIG. 6 is a figure for explanation of a case in which contents are distributed to a signal reception device and to a portable terminal, according to another embodiment.
FIG. 7 is a figure for explanation of a method by which ID of persons who are visiting is obtained, and a correspondence is established with information corresponding to position ID.
FIG. 8 is a schematic block diagram showing the structure of a system 10 for guiding persons who visit a facility, to which an information distribution server and a totaling system according to a second embodiment of this invention are applied.
FIG. 9 is a figure for explanation of the function of an information for distribution management section 15.
FIG. 10 is a figure for explanation of the function of the information for distribution management section 15.
FIG. 11 is a flow chart for explanation of the operation of the system 10 for guiding persons who visit a facility, for distributing information for distribution.

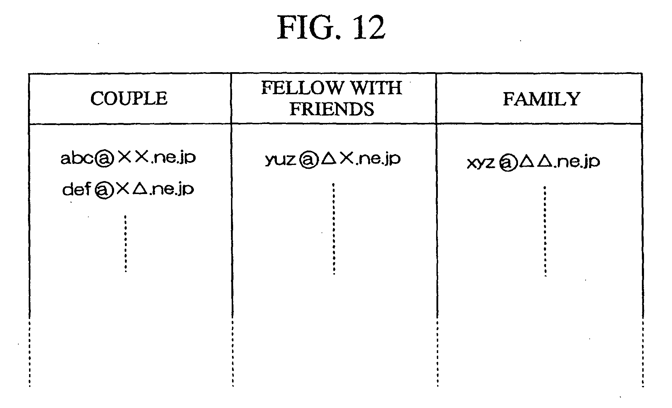

FIG. 12 is a figure showing an example of registration information which is stored by categories in a signal destination information database 13.
FIG. 13 is a figure showing an example of information which is stored in a contents database 109, in a third embodiment.
FIG. 14A and FIG. 14B are examples of the output screens of a signal reception device and a portable terminal, when contents which have mutual relevance have been transmitted to the signal reception device and the portable terminal.
FIG. 15A and FIG. 15B are figures showing an example of information which is stored in a signal destination information database 107, in the third embodiment.
FIG. 16A and FIG. 16B are figures showing an example of information which is stored in the signal destination information database 107 and a contents database 109, for the case when categories have been provided to information for distribution and to persons who visit.
FIG. 17 is a figure showing an example of a case in which a choice for contents has been outputted to the signal reception device.
FIG. 18 is a schematic block diagram showing the structure of an information distribution system of a fourth embodiment.
FIG. 19 is a figure for explanation of the category information.
FIG. 20A and FIG. 20B are figures for explanation of a solid formation and an offset formation which are set up in information for distribution.
FIG. 21 is a figure for explanation of the form of a tag 70 in another embodiment.
FIG. 22 is a flow chart for explanation of processing which is performed by an information distribution system according to the fourth embodiment, for distributing information for distribution.
FIG. 23 is a figure for explanation of changing over of a display screen of a portable telephone device 3, in the fourth embodiment.
FIG. 24 is a figure for explanation of a roaming range when setting up a place as category information.
FIG. 25 is a figure for explanation of the timing at which electronic mail is dispatched to the portable telephone device 3, when "place" has been set up in the category information.
FIG. 26 is a figure for explanation of the circumstances in which information for distribution is distributed, when "property" has been set up as the category information.
FIG. 27 is a figure for explanation of the circumstances in which information for distribution is distributed, when "intention" has been set up as the category information.
FIG. 28 is a figure for explanation of the information for distribution which is distributed, when the category information "time zone" has been set up.
FIG. 29 is a figure showing an example of the case when the contents of the information for distribution are to be changed for a specified day.

### EXPLANATION OF THE REFERENCE SYMBOLS

- 1 ∼: information distribution server;
- 2 ∼: totaling system;
- 3 ∼: portable telephone device;
- 4 ∼: information terminal;
- 5 ∼: wireless base station;
- 6 ∼: enterprise terminal;
- 7 ∼: network;
- 10 ∼: information distribution system;
- 11 ∼: registration information reception section;
- 12 ∼: information for distribution database;
- 13 ∼: signal destination information database;
- 14 ∼: signal distribution section;
- 15 ∼: information for distribution management section;
- 21 ∼: information acquisition section;
- 22 ∼: total information database;
- 23 ∼: totaling section;
- 30 ∼: work area;
- 40 ∼: computer;
- 50, 50-n ∼: reader-writer;
- 60, 60-n ∼: controller;
- 70 ∼: tag;
- 101 ∼: management console section;
- 102 ∼: locator engine;
- 103 ∼: read out section;
- 104 ∼: signal reception section;
- 105 ∼: signal distribution section;
- 106 ∼: action rule;
- 107 ∼: signal destination information database;
- 108 ∼: user profile database;
- 109 ∼: contents database.

### DETAILED DESCRIPTION OF THE PREFERRED EMBODIMENTS

In the following, an information distribution systems to which are applied an information distribution server and a recording medium upon which are stored the IDs of persons who are visiting, according to an embodiment of the present invention, will be explained with reference to the figures.

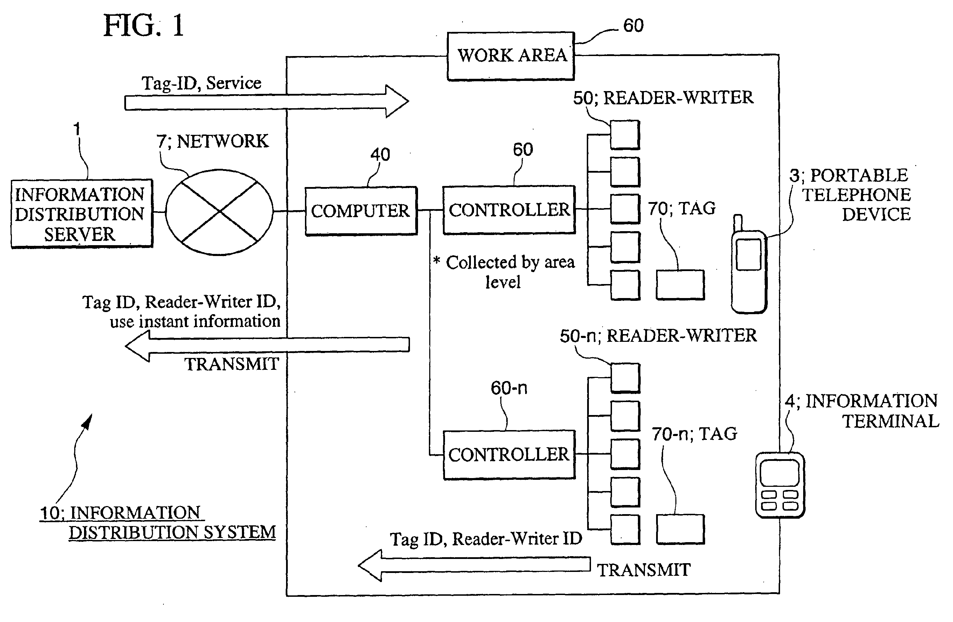

FIG. 1 is a schematic block diagram showing the structure of an information distribution system 10 to which an information distribution server and a recording medium have been applied, according to an embodiment of the present invention.

In this figure, in the information distribution system 10, an information distribution server 1 and a computer 40 which has been provided within a wok area 30 are connected together via a network 7.

Within the work area 30, apart from the computer 40, there are provided a plurality of reader-writers 50, and a controller 60 which collects together the outputs from the reader-writers 50 by area level and outputs them to the computer 40. By this work area, for example, is meant a compound business facility in which a plurality of enterprises such as restaurants, cinemas, goods sales outlets and the like are collected together.

The portable telephone device 3 and/or the information terminal 4 are carried by persons who are visiting who have attended the compound business facility, and they are portable terminals which perform communication with the information distribution server 1 via the network 7. Although in FIG. 1 only the portable telephone device 3 and the information terminal 4 are shown as portable terminals, they are not limited to these, provided that they are ones which are connected to the network and are endowed with a function of performing data transmission. For example, it will be acceptable to utilize a PDA (Personal Data Assistant), a game machine, a pager which is a portable wireless summoning device, or the like. Furthermore, although in FIG. 1 only two of these portable terminals are shown, more than two of them may be connected.

Yet further, herein, by "a person who is visiting is meant a user who is utilizing the information distribution service provided by the information distribution system of the present invention.

The tags 70 through 70-n (where n is a natural number greater than or equal to 1) are IC tags, and they may be of a non contact type, a contact type, a hybrid type or the like. For example, these tags 70 may be RFID (Radio Frequency Identification) tags, and, along with storing IDs of persons who are visiting which are information for discriminating between the persons who are visiting, also perform communication with the reader-writers 50, and, along with providing the ID of the person who is visiting to the reader-writer 50, also store the reader-writer ID of the reader-writer 50 which is dispatched from the reader-writer 50. Storing of this reader-writer ID is performed every time communication is performed with the reader-writer 50. These tags 70 through 70-n are issued to each of the persons who is visiting and attends within the work area 30, and are carried by each of the persons who is visiting. This tag 70 through 70-n [sic] may be adhered, for example, to the portable terminals or to media such as entry tickets or the like for entry to the compound business facility. It should be understood that this reader-writer ID corresponds to a position ID.

After this, the reader-writer ID is also termed a position ID. This position ID is information for discriminating between the various reader-writers 50 through 50-n, and, by these reader-writer IDs, it is possible to discriminate between, and to apprehend, the positions of each of the reader-writers 50 through 50-n which have been provided within the work area. Due to this, it is possible to apprehend the position of the person who is visiting by apprehending the position ID of the reader-writer 50 which has detected the tag ID of the tag 70.

The reader-writer 50s are provided within the work area 30, and they obtain the IDs of persons who are visiting by performing communication with the tags 70 through 70-n which have approached within a region in which communication is possible, and establish correspondence between the ID of the persons visiting and the reader-writer IDs which are set within themselves and dispatch them to the controller 60. Furthermore, apart from reading in the ID of the persons who are visiting from the tags 70, the reader-writers 50 also are endowed with a function of dispatching data to the tags 70, and storing it in the tags 70. It should be understood that it would also be possible to utilize some devices other than the reader-writers 50, provided that they were ones which were able to read in the IDs of the persons who were visiting from the tags 70. Furthermore, it would also be possible to utilize some devices other than the reader-writers 50, provided that they were ones which were endowed with a function of reading in the IDs of the persons who were visiting from the tags 70, and with a function of dispatching data to the tags 70 and storing it within the tags 70.

The computer 40 receives the position information which is collected together and dispatched by the controllers 60, and appends time instant information which gives the time instant at which it was thus received to the position information and dispatches it to the information distribution server 1 via the network 7.

The combination of this reader-writer 50, controller 60, and computer 40 corresponds to the device for obtaining the ID of persons who are visiting.

The network 7 is a network which takes lines or wireless as an object, and which utilizes the internet, a telephone line, a dedicated line or the like.

Next, the information distribution server 1 will be explained using the figures.

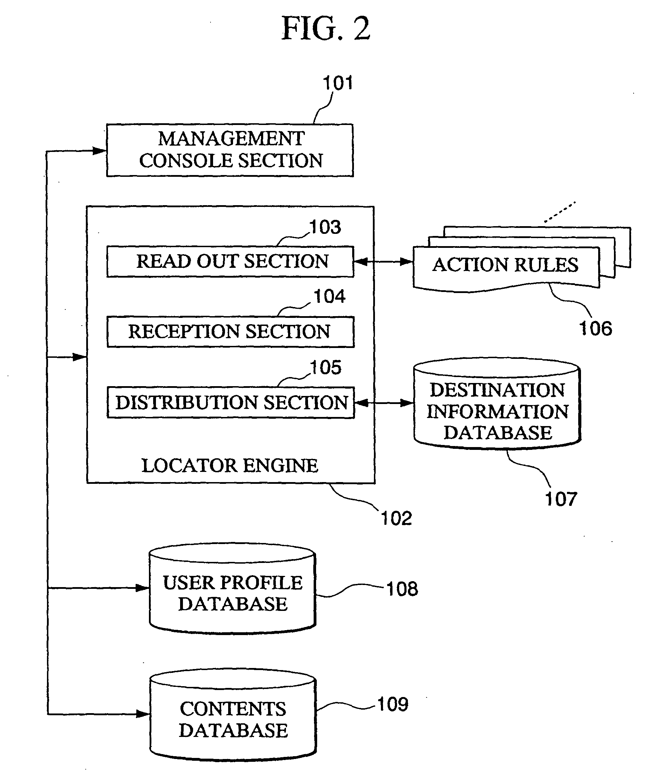

FIG. 2 is a schematic block diagram showing the structure of the information distribution server 1. In this figure, a contents database 109 stores contents. These contents which are stored are information which can be transferred electronically, such as, for example, guide information for guiding within the work area 30 (the compound business facility), or amusement information, moving images, games, programs, electronic coupons, tickets or the like. Furthermore, the contents may be original information (contents) which is provided to persons who are visiting, and which are processed in various manners as scenarios when being distributed to the persons who are visiting.

The signal destination information database 107 (hereinafter termed the signal destination DB) establishes a correspondence between, and stores, signal destination information, which is information for specifying the portable terminal which is to become the object of distribution of contents, and the ID of the person who is visiting. By signal destination information is meant information which specifies the portable terminal, and which is used for distributing the information for distribution; for example, an electronic mail address or a telephone number or the like. It should be understood that, as signal destination information, a correspondence may also be established and stored with device type information which is related to the device type name of the portable terminal of the signal destination.

Furthermore, the signal destination DB 107 establishes a correspondence between, and stores, signal destination information, which is information for specifying a signal reception device which is to become the object of distribution of contents, and the position ID. This signal reception device may be a large sized display, a screen, a speaker, a robot or the like which is provided within the compound business facility.

Here, the registration of the ID of the person who is visiting and of the signal destination information will be explained. When a person who is visiting enters within the compound business facility, registration of his ID and signal destination information is performed according to the method shown below.
Registration sequence A. (a) The personnel hand over an attendance form to which the tag 70 has been adhered to the person who is visiting. (b) The person who is visiting writes down his electronic mail address, which is one type of signal destination information, and the device type name of his portable terminal, which is device type information, both of which are items for entry upon the attendance form, and hands it over to the personnel. (c) The personnel establish a correspondence between the tag ID of the tag 70 which was adhered to the attendance form and the electronic mail address and the device type name of the portable terminal which have been written upon the attendance form, input it from an input device (not shown in the figures), and register it in the signal destination DB 107. And the tag 70 is peeled away from the attendance form, and is handed to the relevant person who is visiting. This tag ID becomes the ID of the person who is visiting.
Registration sequence B. (a) The person who is visiting inputs his electronic mail address, which is one type of signal destination information of his own portable terminal, and the device type name of his portable terminal, which constitutes device type information, to a tag issuing device. (b) The tag issuing device temporarily stores the electronic mail address and the device type name which have been inputted, and ejects a tag 70, which it has been storing internally, through a delivery chute. (c) The person who is visiting receives the tag 70 which has been ejected through the delivery chute. (d) The tag issuing device takes the tag ID which has been set in advance to the tag 70 which has been ejected as the ID of the person who is visiting, establishes a correspondence between it and the electronic mail address and the device type name which it has temporarily stored, and stores it in the signal destination DB 107.

It should be understood that, with the registration sequence B, it would also be acceptable to integrate the tag 70 which is issued with a site entry ticket for the facility. By doing this, it becomes possible for the person who is visiting to come into possession of the tag 70, without being aware of the existence of the tag 70.

A locator engine 102 is made up from a read out section 103, a signal reception section 104, and a dispatch section 105. The signal reception section 104 receives the ID of the person who is visiting and his position ID which are dispatched from the computer 40.

The read out section 103 reads out from the contents database 109 the contents which correspond to the position ID which is included in the position information which the signal reception section 104 has received.

Furthermore, the read out section 103 reads out contents from the contents database 109 according to history of position information which is stored in a user profile database 108, based upon action rules for determining contents to be distributed according to profiles (histories) of position information.

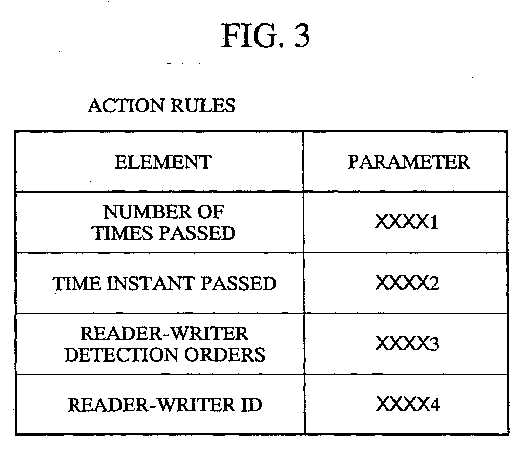

Here, as elements for the action rules to determine contents, for example, as shown in FIG. 3, they may consist of a detected number of times which gives the number of times the ID of the person who is visiting has been read in by the reader-writer 50, a detected time instant which is the time instant that the ID of the person who is visiting has been read in, an order of reader-writer detection which is the order in which the ID of the person who is visiting has been detected by the plurality of reader-writers 50 through 50-n (i.e. the order of the reader-writers which have read in the ID of the person who is visiting), and a reader-writer ID which gives the reader-writer which has last read in the ID of the person who is visiting. These elements are totaled for each of the persons who is visiting, and a parameter which corresponds to the totaled results is provided to the management console section 101, and is stored within the user profile database 108.

The signal distribution section 105 reads out from the signal destination DB 107 the signal destination information which corresponds to the ID of the person who is visiting which is included within the position information, and dispatches the contents which have previously been read out by the read out section 103 to the signal destination information which has been read out. Furthermore, the signal distribution section 105 dispatches the contents which have been read out by the read out section 103 to the signal destination information which corresponds to the position ID which is included in the position information. In this case, the object of dispatch of the contents is the signal reception device.

The user profile database 108 (in the following termed the "history DB") stores the position information which the signal reception section 104 receives for each of the persons who is visiting as a history.

The management console section 101 controls the various sections of the information distribution server 1.

The management console section 101 receives, via the signal reception section 104, utilization information which includes information which shows that a specified service within the compound business facility has been utilized (for example, goods have been purchased, a restaurant or bar has been utilized, or a cinema has been utilized) , and the ID of the person who is visiting and who has utilized the service, and, based upon the ID of the person who is visiting, stores this utilization information which it has received in the history DB 108 in correspondence with the position information.

Furthermore, when it has received position information, the management console section 101 also, based upon the position information which it has received, detects whether distribution of contents from the history DB 108 have been received, and detects whether or not the service is still being utilized, and, if the contents have already been distributed, or if the service is still being utilized, performs control so as not to dispatch contents corresponding to this position information.

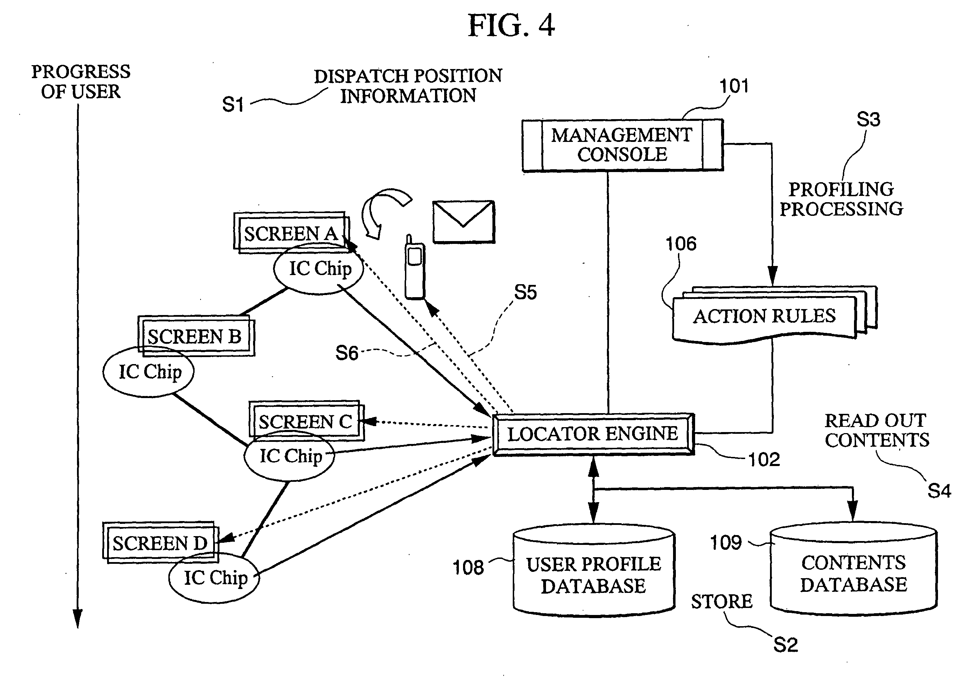

Next, the operation of the information distribution system 10 according to the structure of FIG. 1 will be explained using FIG. 4. FIG. 4 is a flow chart for explanation of the operation of this information distribution system 10. It should be understood that, in this FIG. 4, the case in which the portable telephone device 3 has been utilized as the portable terminal will be explained.

First, the tag 70 is issued to and is carried by a person who is visiting and who has attended within the compound business facility which constitutes the work area 30. And the person who is visiting roams within the compound business facility while carrying the tag 70 and the portable telephone device 3. At this time, if the person who is visiting and who is carrying the tag 70 has passed within a region in which communication with one reader-writer 50 among the plurality of reader-writers 50 through 50-n is possible, the reader-writer 50, along with reading out the ID of the person who is visiting from the tag 70, also dispatches its reader-writer ID (its position ID) to the tag 70. And the reader-writer 50 establishes a correspondence between the ID of the person who is visiting which it has thus read out and the reader-writer ID of the reader-writer 50 and dispatches it as position information to the computer 40 via the controller 60. The computer 40 further includes time instant information in the position information which is dispatched from the reader-writer 50 and dispatches it via the network 7 to the information distribution server 1 (in a step S1).

After having stored the position information which it has received with the signal reception section 104 in the history DB 108 (in a step S2), the information distribution server 1 performs profiling processing upon the ID of the person who is visiting which is included within the position information which it has received. In other words, it makes totals for the number of times detected, the detection time instant, the reader-writer passing order, and the reader-writer ID, appends parameters which correspond to the results of totaling to the elements with the management console section 101, and stores them in the history DB 108 (in a step S3).

Next, the information distribution server 1 reads out from the contents database 109 (in a step S4) the contents which correspond to the combinations of parameters which have been appended to the various elements which constitute action rules. And it reads out from the signal destination DB 107 the electronic mail address, which is one type of signal destination information which corresponds to the ID of the person who is visiting which is included in the position information for which profiling processing has been performed, and distributes the contents which have been read out to the portable telephone device 3 for which the electronic mail address which has been read out is set (in a step S5).

Furthermore, the information distribution server 1 reads out from the signal destination DB the signal destination information which is included in the results of profiling processing and which corresponds to the reader-writer ID which gives the reader-writer which has last read in the ID of the person who is visiting, and dispatches the contents to the signal reception device which is set in this signal destination information (in a step S6). It should be understood that the reader-writer 50 signal reception device 50 which has last read in the ID of the person who is visiting need not necessarily always be the same. For example, it may also be a signal reception device which has been set up in a location which is the next place which the person who is visiting calls at.

It should be understood that, in the above described embodiment, the contents which are dispatched to the portable telephone device 3 and the contents which are dispatched to the signal reception device may be the same, or may be different. Furthermore, if different contents are distributed, it is possible to provide a large amount of contents to the person who is visiting, by providing contents with a liaison being established between the contents which are dispatched to the portable telephone device 3 and the contents which are dispatched to the signal reception device.

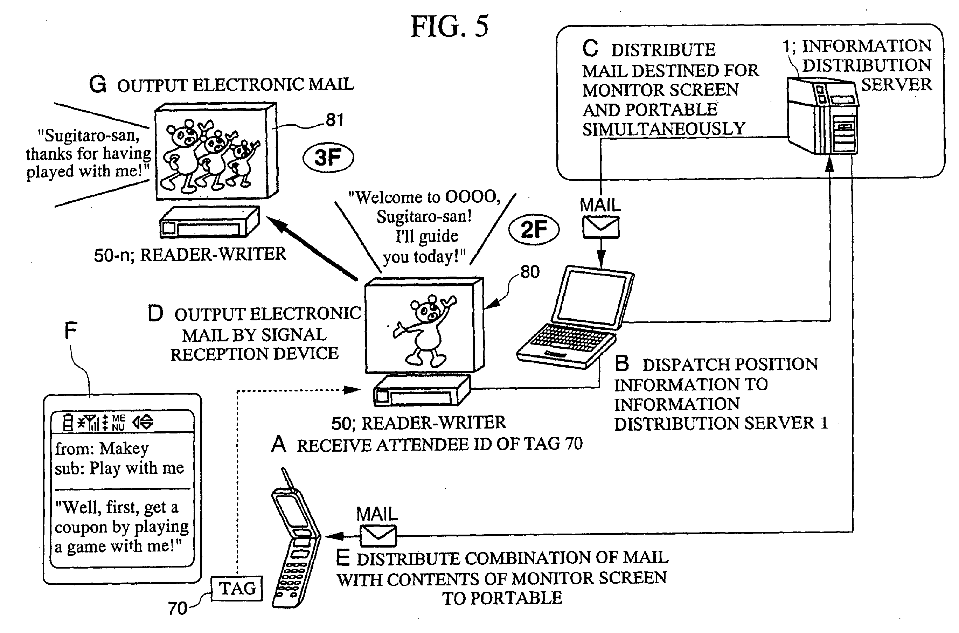

For example, as shown in FIG. 5, after the ID of the tag 70 of a person who is visiting has been read out with a reader-writer 50 which is provided upon the second floor of a compound business facility (the reference symbol A), the position information is dispatched to the information distribution server 1 by the computer 40 (the reference symbol B), and the contents destined for the portable telephone device 3 (here assumed to be electronic mail) and the contents destined for the signal reception device 80 are dispatched from the information distribution server 1 at the same time (the reference symbol C). And, in the signal reception device 80, along with electronic mail to the effect "Welcome to OOOO, Sugitaro-san! I'll guide you today!" being outputted from the speaker, output is provided upon a monitor screen such as a screen which is provided in the vicinity of the reader-writer 50 (the reference symbol D). And electronic mail is distributed to the portable telephone device 3 in combination with the contents of the monitor screen (the reference symbol E). At this time a display such as, for example, "Well, first, get a coupon by playing a game with me! " or the like is provided on the screen of the portable telephone device 3, as shown by the reference symbol F.

And information related to a game is transmitted and received between the portable telephone device 3 and the information server 1, and the record of playing this game is stored upon the information distribution server 1 as utilization information. And, when the person who is visiting and is carrying the tag 70 shifts to the third floor of the compound business facility and the tag 70 with the ID of the person who is visiting is read out, new electronic mail is dispatched to the signal reception device 80 from the information distribution server 1, based upon the action rules, and taking account of the utilization information (the reference symbol F). Here, electronic mail is distributed according to the history that the second floor has been transited and the history that the game on the second floor has been performed. For example, along with a voice such as "Sugitaro-san, thanks for having played with me!" or the like being outputted from a speaker by the signal reception device 81, a display of a character may be provided upon a monitor screen.

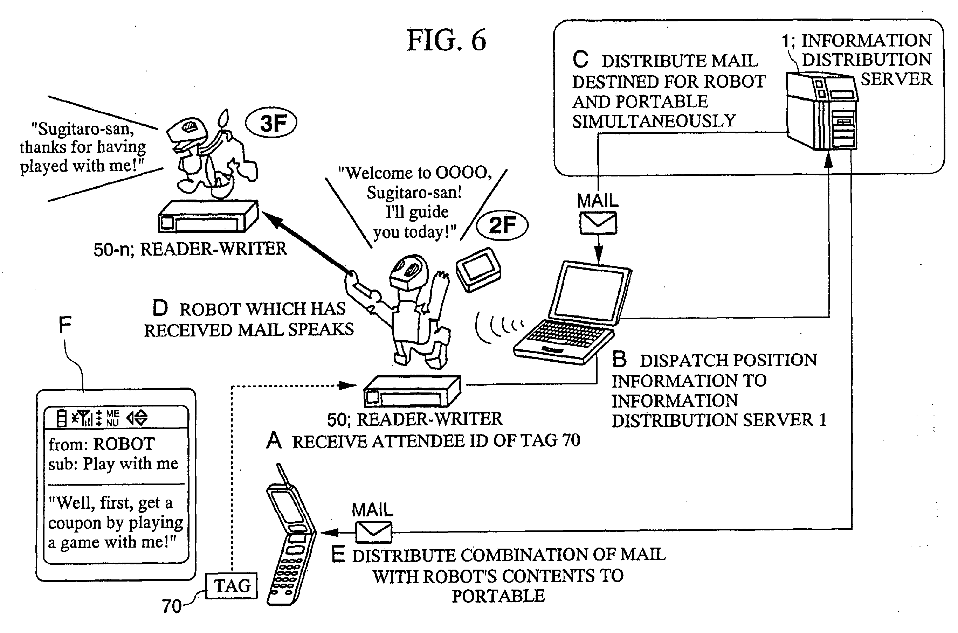

Furthermore, although the explanation has been made in terms of the case in which a character is displayed upon the monitor screen of the signal reception devices 80 and 81 of FIG. 5, it would also be acceptable, as shown in FIG. 6, to arrange for a robot to move a hand or a foot according to the contents of the electronic mail, along with a voice being outputted from a speaker.

Furthermore, it would also be acceptable to distribute the contents to only one of the portable telephone device 3 and the signal reception device.

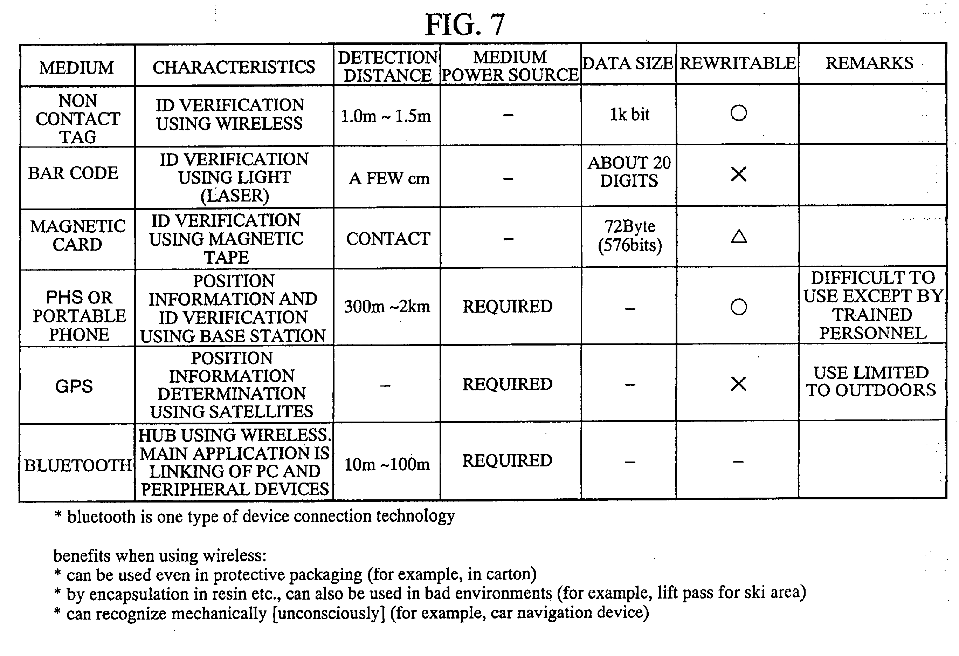

Yet further although, in the above described embodiment, the explanation has been made in terms of the case in which the tag 70 is read by the reader-writer 50, it would also be acceptable to use some method other than one in which the tag 70 was read by the reader-writer 50, provided that it was a method which was capable of obtaining information which specified the person who was visiting (the ID of the person who was visiting) and information which specified the position (the reader-writer ID or the position ID). For example, the methods shown in FIG. 7 may be proposed.

Various methods will now be explained with the use of this figure.

### The method of using a bar code.

Instead of the tag, a card or a sticker or the like upon which a bar code which gives the ID is printed is issued to the person who is visiting and is carried by him, and, instead of the reader-writer, this bar code of the person who is visiting is read by a bar code reader.

### The method of using an magnetic card

Instead of the tag, an magnetic card upon which information is stored which gives the ID is issued to the person who is visiting and is carried by him, and the information on this magnetic card is read in by a card reader.

### The method of using a PHS telephone system or a portable telephone device

Information which is generated by a PHS telephone system or a portable telephone device is received by a base station, and the fact that the PHS telephone system or the portable telephone device has shifted within the area in which the base station which has performed this reception is detected.

### The method of using a GPS (Global Positioning System)

This recognizes position information (corresponding to the reader-writer ID or the position ID) of a GPS receiver which uses satellites.

### The method of using Bluetooth

Communication is performed between a Bluetooth device held by the person who is visiting and a Bluetooth device which is provided within the compound business facility, and thereby the ID of the person who is visiting and the reader-writer ID or the position ID is apprehended.

Although, as shown in this FIG. 7, a plurality of methods for obtaining the ID of a person who is visiting and for establishing a correspondence with information which corresponds to position ID may be considered, the use of a non-contact type IC tag, a contact type IC tag, a bar code, or an magnetic card is considered to be desirable, from the point of view of detecting the position of the person who is visiting with high accuracy when he approaches the position of detection, such as the compound business facility. Moreover, it is considered that the use of a non contact type tag IC is desirable, from the point of view of being able to obtain the ID of the person who is visiting or his position ID without the person who is visiting being aware thereof.

Next, a second embodiment will be explained.

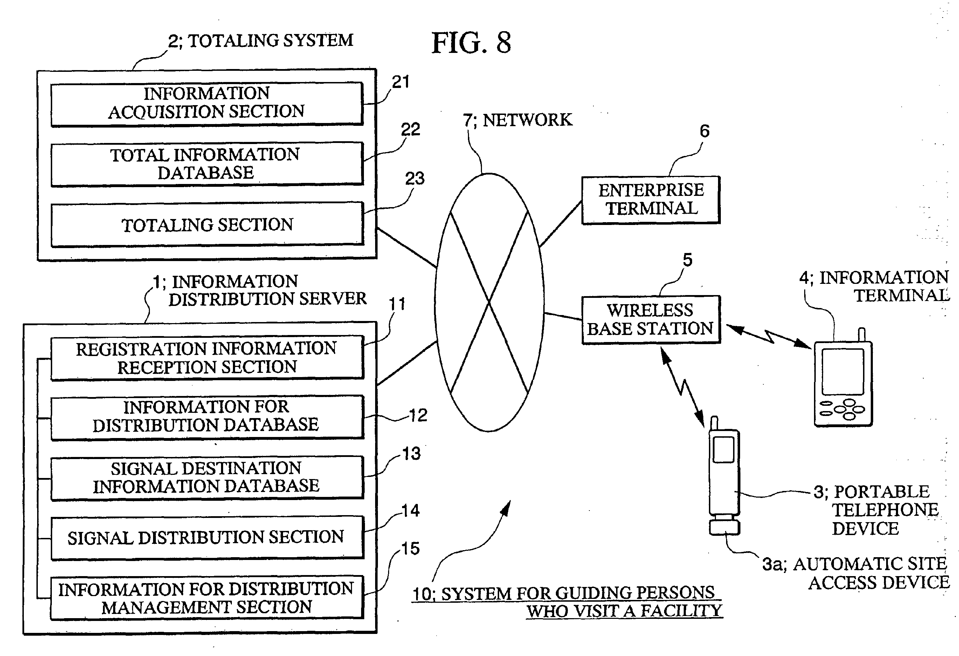

FIG. 8 is a schematic block diagram showing the structure of a system 10 for guiding persons who visit a facility which utilizes an information distribution server 1 and a totaling system 2 according to an embodiment of the present invention.

Referring to this figure, in the system 10 for guiding persons who visit a facility, an information distribution server 1, a totaling system 2, a wireless base station 5 which is connected by wireless to a portable telephone device 3 and an information terminal 4, and an enterprise terminal 6 are connected together via a network 7, and are provided within a compound business facility.

By being connected to a data transmission terminal of the portable telephone device 3, an automatic site access device 3a is endowed with a function of automatically accessing a home page (hereinafter termed a "welcome page") for attendance registration to the distribution service for the information which is to be distributed of the system for guiding persons who visit a facility.

Furthermore, the automatic site access device 3a is endowed with functions of reading out signal destination information such as an electronic mail address or the like which is set in the portable telephone device 3 to which it is connected, and device type information, which is information related to the device type of the portable telephone device 3, and of transmitting the electronic mail address and the device type information which it has read out to the information distribution server 1 with the portable telephone device 3, via the wireless base station 5 and the network 7.

The information distribution server 1 is made up from a registration information reception section 11, an information for distribution database 12, a signal destination information database 13, a signal distribution section 14, and an information for distribution management section 15.

The registration information reception section 11 obtains registration information which includes signal destination information of the portable terminal which is to become the object of distribution of the information which is to be distributed, category information, and device type information which gives the device type of the portable terminal, accepts the registration, and stores it in the signal destination information database 13.

Here by "category information" is meant information which specifies properties of the person who visits the facility, and, for example, "couple" may designate persons who visit as a couple, "fellow with friends" may designate a visit as a friend among fellows, "family" may show a visit as a family, and the like.

The registration information includes signal destination information and category information.

The information for distribution is guide information for performing guiding within the facility, and is distributed as contents

The information for distribution database 12 (hereinafter termed the "distribution DB"), along with time instants at which distribution should be performed being set in advance as distribution time instants, also stores information for distribution for which property information which designates a property of the object of distribution has been set in advance.

The signal destination information database 13 (hereinafter termed the "signal destination DB") stores the signal destination information, which is the registration information which has been acquired by the registration information reception section 11, and the category information, in correspondence with one another.

The signal distribution section 14 distributes the information for distribution which has been stored in the information for distribution database 12 to the signal destination information which is included in the registration information, based upon the distribution time instants which have been set.

Furthermore, when distributing the information which is to be distributed, the signal distribution section 14 reads out from the signal destination DB 13 the registration information which corresponds to the property information which has been set in the information for distribution, and distributes it to the portable terminal of the applicable registration information. To express this in more detail, it reads out the signal destination information for which category information has been set which corresponds to the property information which has been set in the information for distribution. And the signal distribution section 14 distributes the information for distribution to the portable terminal, based upon the signal destination information which it has read out.

Yet further, the signal distribution section 14 converts the format of the information for distribution which is to be distributed based upon the device type information which is included in the registration information, and distributes it to the portable terminal which is specified in the signal destination information for which correspondence has been established to this device type information.

It should be understood that the signal distribution section 14 obtains the present time instant based upon a clock (a clock function) which it contains internally.

The information for distribution management section 15 receives information for distribution whose distribution has been entrusted from each enterprise within the compound business facility, or reads it in from a recording medium upon which or information for distribution is stored, performs preparations for distribution of the information for distribution, and stores it in the distribution DB 12. These preparations for distribution of the information for distribution consist of performing a setting for, according to the passage of time (according to a time schedule), transmitting, to the portable terminals which the various persons who visit are carrying, information for distribution whose contents correspond to each of the persons who visit and who have been classified according to the category information among the information for distribution which has been obtained from the various enterprises and whose distribution has been entrusted. This setting is termed setting of property information and distribution time instant in the information for distribution. Furthermore, this property information is information which is provided corresponding to the category information of the persons who visit. For example, the property that the category information is "couple" may be set as property information in the information for distribution which is distributed to the persons who visit whose category information is "couple".

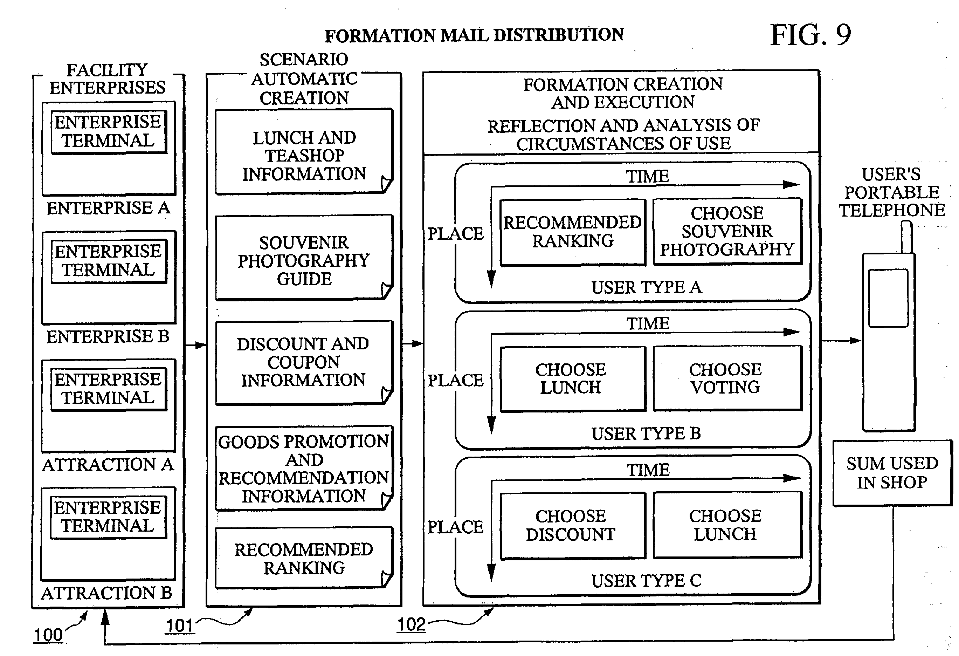

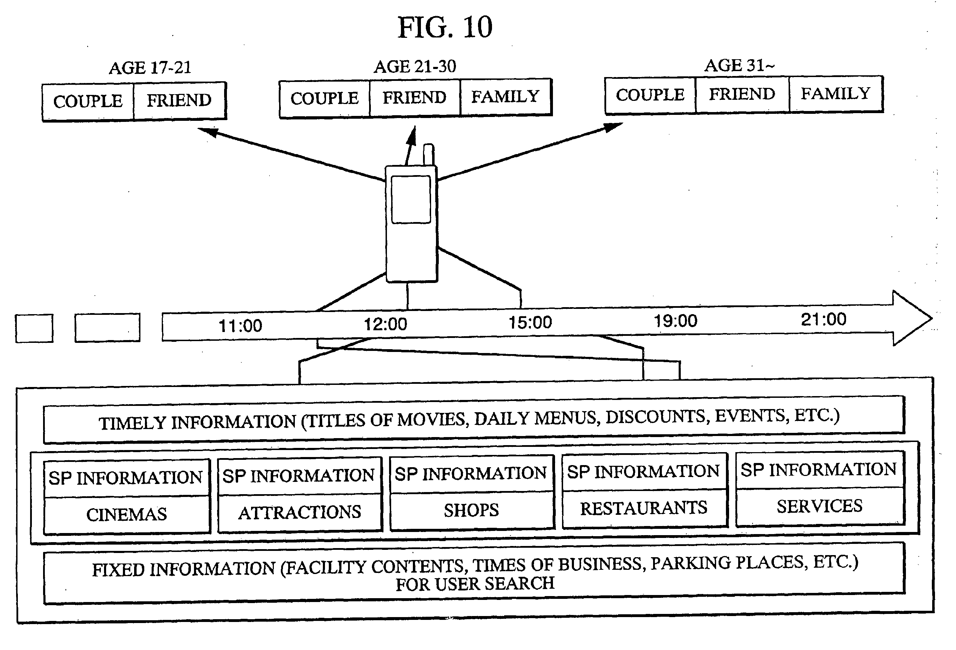

The function of the information for distribution management section 15 will now be explained in detail using FIGS. 9 and 10.

Referring to FIG. 9, the information for distribution management section 15 constructs a scenario (the reference symbol 101) to be distributed to the persons who visit, using the contents of the information for distribution (the reference symbol 100) which is being stored in the distribution DB 12 and which has been entrusted for distribution from the enterprises in the facility. Here, the information for distribution which has been entrusted for distribution is classified into genres according to the contents which are to be distributed, like "lunch and teashop information", "souvenir photography guide", "discount and coupon information", and the like.

And, the formation of the scenario which has been created is set (the reference symbol 102) according to the property information and the flow of time. For the case in which the property information is user type A, after having distributed the information "recommendation ranking", a time schedule is set as a formation for distribution of the information "souvenir photography amusement" at a time instant which has been set.

When a formation is set in this manner, it is possible to distribute in order the information for distribution which has been processed in a timely manner in a scenario to the persons who visit who have been classified according to the various category information, according to the flow of time, as shown in FIG. 10. By doing this, the persons who visit are able to obtain in order items of information whose starting time instants have been determined in advance about films, daily special menus, discounts, events and the like, so that, due to this, it is possible for the persons who visit to roam within the compound business facility without any wasteful activity on their own part.

It is also possible to set property information according to the type (the category information) of the persons who visit, so that, for example, for cases where the category information is "couple", the information for distribution of an enterprise which offers a lunch intended for young people may be distributed before noon, and information for distribution which gives the starting times and the contents of films which start from the time point at which it is surmised that lunch has been finished, and a guide to where they are showing, may be distributed.

In this manner, by distributing the information for distribution along with the passage of time, according to the property information and the flow of time, it is possible to provide the information for distribution which the enterprises wish to recommend in a timely manner according to the types and the needs of the persons who are visiting.

It should be understood that, as fixed information, it is also possible to store in advance information related to times of doing business within the facility, parking places, and the like; and these may be distributed according to requests from the portable terminals.

Next, returning to FIG. 8, the totaling system 2 is made up from an information acquisition section 21, a total information database 22, and a totaling section 23; and it forms totals of the circumstances of utilization of the information for distribution which has been distributed by the information distribution server 1.

The information acquisition section 21 obtains ID information which, along with being established in correspondence with the signal destination-information, is appended to and is distributed with the information for distribution. Furthermore, the information acquisition section 21 obtains utilization information, which is information related to the utilization of establishments by persons who visit and who are carrying portable terminals.

Here, the ID information is information which, along with being able to discriminate the information for distribution, can discriminate the portable terminal which is the signal destination. It is possible to apprehend what information for distribution is to be distributed to which portable terminal by utilizing this ID information.

The utilization information includes one or both of information related to the time instant of having utilized an enterprise which is provided within the facility, and information related to the utilization amount of money which the person visiting has utilized at the enterprise. By referring to this utilization information, it is possible to apprehend the time instant at which the person visiting has utilized the enterprise (for example, the instant he has entered the enterprise, and/or the instant he has left it), and the total price of the goods which he has purchased, and/or the price which he has paid for a service. It should be understood that, in this utilization information, there may also be included the name of the goods, or the name of the service, which has been purchased.

This information acquisition section 21 corresponds to the utilization information obtaining means and the ID information obtaining means. Furthermore, the information for distribution to which the ID information is appended may include information related to an electronic coupon. By an electronic coupon is meant, for example, information for causing a coupon which can be utilized in an enterprise within the compound business facility to be displayed upon the screen of the portable terminal, where, by posting the electronic coupon which has been displayed upon the screen at an enterprise, a discounted or privileged service can be obtained.

The total information database 22 stores the ID information which has been acquired by the information acquisition section 21 and the utilization information, while establishing a correspondence between them.

The totaling section 23 performs totaling processing for the various types of information which have been stored in the total information database 22.

An enterprise terminal 6 is provided to each enterprise within the compound business facility, and this obtains the ID information and the utilization information which are appended to electronic coupons, and dispatches the ID information and utilization information which it has obtained via the network 7 to the totaling system 2. This obtaining of ID information is performed by the enterprise personnel reading in the ID information which has been displayed upon the screen of the portable terminal and inputting it to the enterprise terminal 6 using an input device such as a tenkey pad or the like. Alternatively, the ID information may be displayed upon the screen as a bar code, and this bar code may be read in with a bar code reader, and inputted to the enterprise terminal 6. This enterprise terminal 6, for example, may be constituted by an information processing terminal such as a POS (Point Of Sale), or a personal computer or the like.

The obtaining of the utilization information may utilize, for example, data which has been electronically settled between the portable terminal and the enterprise terminal 6 during a settlement related to utilization of the enterprise, and may be performed by obtaining it along with the information relating to the utilization time point. Furthermore, the obtaining of the utilization information may, for example, also be performed by the enterprise personnel reading in the ID information which has been displayed upon the screen of the portable terminal, and by them also, at the same time, performing a settlement in a non electronic manner by typing in the amount of the transaction upon a tenkey pad or the like.

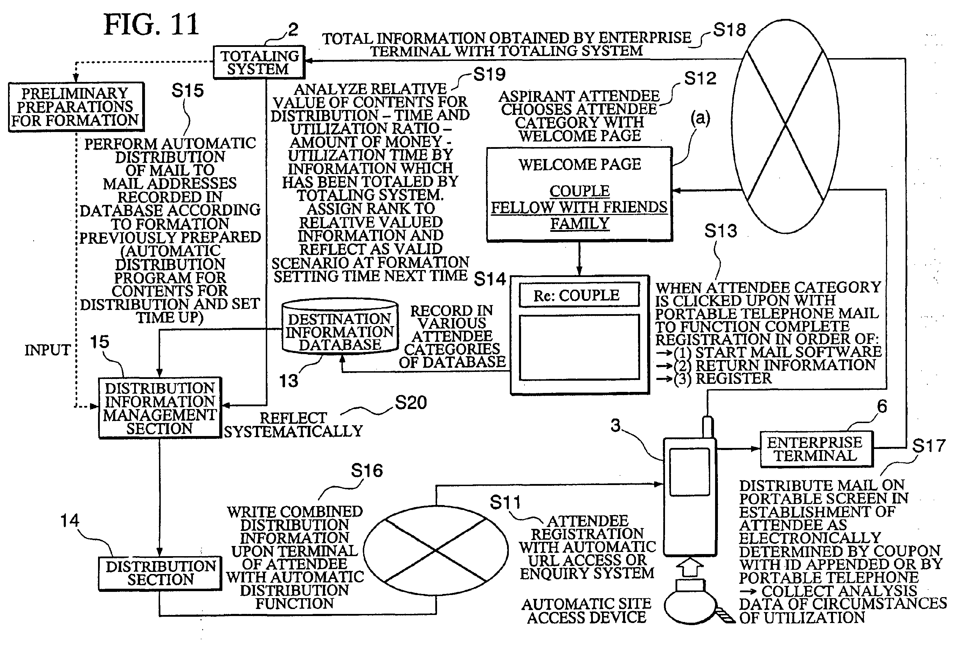

Next, the operation of the system 10 for guiding persons who visit a facility made up as shown in FIG. 8 for distributing information which is to be distributed will be explained using the flow chart of FIG. 11.

Here, distribution preparation of the information for distribution is performed in advance by an active formation function of the information for distribution management section 15, based upon the contents which have been entrusted for distribution from each enterprise within the compound business facility, the time instant when it is ordered to be distributed, and the property information which orders the object of distribution, and it is stored in the information for distribution database 12.

Although, in this flow chart of FIG. 8, the explanation has been made in terms of the case in which the portable telephone device 3 has been used as the portable terminal, an information terminal 4 may also be employed in the same manner.

First, when a person who is visiting carrying the portable telephone device 3 attends a location within the compound business facility, the automatic site access device 3a is loaned by the personnel of the compound business facility to the person who is visiting. The person who is visiting connects the automatic site access device 3a to the portable telephone device 3, accesses the welcome page of the information distribution server 1, and performs a request for attendance registration (in the step S11). Here, it may also be the case that he writes down upon an enquiry form signal destination information such as his electronic mail address or the like, category information, and device type information, and proffers it to the enterprise personnel, and the personnel perform registration of the information which is entered upon the enquiry form by utilizing. a keyboard, a mouse or the like. In this manner, the obtaining of the registration information is performed within the enterprise. Furthermore, it will also be acceptable to arrange for it to be possible to obtain the registration information by inputting the signal destination information, the category information, and the device type information by using a computer terminal which is specially provided within the enterprise.

When the welcome page is accessed, a display is provided upon the screen of the portable telephone device 3 for prompting selection of the category information, like, for example, that shown at (a) of FIG. 11. And when, for example, among the category information upon the screen, "couple" is selected and is clicked by the person who is visiting (in the step S12), then the mail software of the automatic site access device 3a starts to operate, and the signal destination information of the electronic mail address, the device type information, and the category information "couple" are dispatched as reply information (for example, as mail) from the portable telephone device 3 to the information distribution server 1 by an electronic mail address notification function, and are registered as the registration information in the signal destination DB 13 (in the steps S13 and S14). Each time a request for registration of a person who is visiting occurs, the above described steps S11 through S14 are performed, and the attendance registration procedure is performed.

By this attendance registration procedure being performed, for example, as shown in FIG. 5, the signal destination information, which is an example of the registration information in the various types of category information in the database, is registered in the signal destination DB 13. Although it is not so shown in the figure, it should be understood that a correspondence is established and is stored for the device type information as well with the signal destination information such as the electronic mail address or the like.

Next, according to an automatic distribution function, the signal distribution section 14 distributes the information for distribution for which the property information and the distribution time point have been set as electronic mail to the electronic mail address which is the signal destination information which has been stored in the signal destination DB 13. (in the step S15). By doing this, at the time instant which has been designated, the distribution destination information is distributed as electronic mail according to the category information of the person who is visiting.

Furthermore, at the time of dispatching the electronic mail, the signal distribution section 14 reads out from the signal destination DB 13 the device type information which corresponds to the electronic mail address which is the signal destination information of the object for dispatch, converts the information for distribution to a format which corresponds to this device type information which has been read out, and distributes it (in the step S16). By doing this, it is possible to distribute the information for distribution which has been made easy to read from the point of view of the person who is visiting. It should be understood that it is presumed that, in this case, data is provided which records a correspondence between the device type information and a format for this device type.

After the electronic mail has been distributed, this electronic mail which has been distributed is displayed upon the screen of the portable telephone device 3. If the information for distribution which has been distributed is related to an electronic coupon, then the coupon is displayed upon the screen along with the ID information. And, if an enterprise which employs the coupon which has been displayed upon the screen is utilized by the person who is visiting and an electronic settlement has been made, then the ID information upon the screen of the portable telephone device 3 is read in by the enterprise personnel of the enterprise, and, along with the ID information from the enterprise terminal 6 to the totaling system 2, the utilization information to the effect that electronic settlement has been performed is dispatched to the totaling system 2 (in the step S17).

When the information acquisition section 21 of the totaling system 2 obtains the ID information and the utilization information which have been dispatched from the enterprise terminal 6 by the information acquisition section 21, the ID information and the utilization information which have been obtained are stored in the total DB 22 with a correspondence being established between them, and they are totaled with the totaling section 23 (in the step S18). This total analyses the relative appraisal between the contents of the information for distribution and its distribution time point, and the utilization ratio and the utilization price and the time of utilization, and performs rank assignment based upon the appraisal result information of performing the relative appraisal (in the step S19).

The result of this appraisal is reflected when setting the active formation for distribution of the information for distribution the next time (in the step S20).

The attendance registration of the person who is visiting is performed according to the procedure which has been explained above, and the information for distribution is distributed at the designated time instant according to the category information of the person who is visiting. By doing this, for example, it is possible to cause the person who is visiting to be aware of an event at a time which is specified.

Furthermore it would also be acceptable to combine the first embodiment and the second embodiment explained above, and to distribute contents to a portable terminal such as the portable telephone device 3 or the like, or to a signal reception device, according to action rules which take account of time instant information and category.

Yet further, it would also be acceptable to distribute contents which separate the enterprises for utilization by the person who is visiting according to the current state of congestion.

Next, a third embodiment will be explained. For this embodiment, the case will be explained of distributing contents which are relevant to a portable terminal and to a signal reception device.

The information distribution system in which an information distribution server is used of this embodiment has the same structure as that shown in FIG. 1 and FIG. 2, but its function is different. In the following, this different function will be explained.

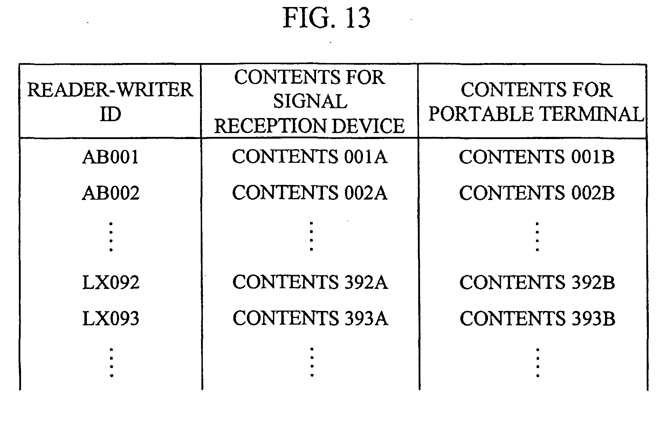

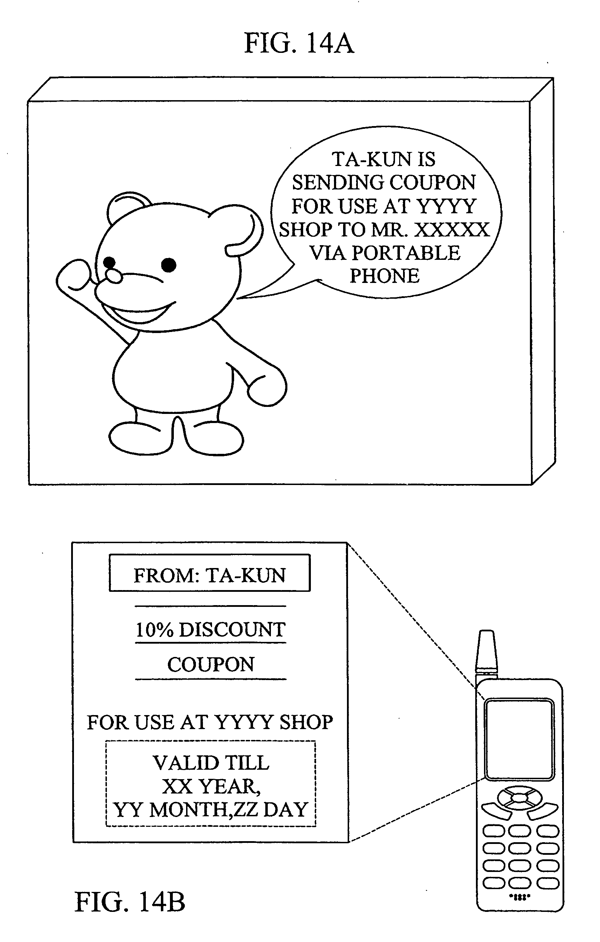

In this embodiment, the contents database 109, as shown in FIG. 13, stores a contents for use by a signal reception device, which is for being dispatched to a signal reception device, and a contents for use by a portable terminal, which is for being dispatched to a portable terminal, and the position ID (in the figures, the reader-writer ID), in correspondence with one another. Here, the contents which are stored as the contents for use by a signal reception device and the contents which are stored for use by a portable terminal have mutual relevance to one another. As an example of contents which have mutual relevance, there is shown the case of, along with outputting "Coupon sent!" to a signal reception device as shown in FIG. 14A, dispatching an electronic coupon to the output screen of a portable terminal as shown in FIG. 14B.

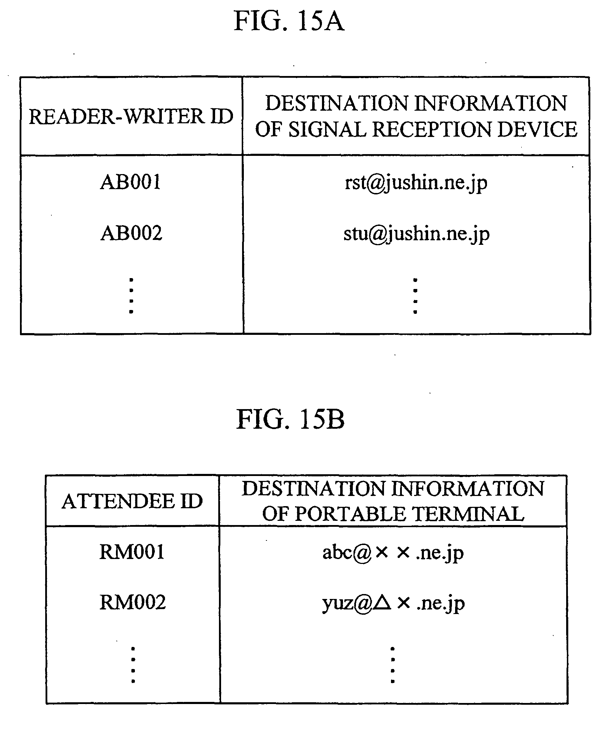

The signal destination information database 107, along with storing the signal destination information of a signal reception device, which is information for specifying a signal reception device which is to become the object of distribution of contents, as shown in FIG. 15A and FIG. 15B, and a position ID (in the figure, the reader-writer ID) in correspondence with one another (FIG. 15A), also stores signal destination information of a portable terminal, which is information for specifying a portable terminal which is to become the object of distribution of contents, and an ID of the person who is visiting, in correspondence with one another (FIG. 15B).

The read out section 103 reads out from the contents database 109 the contents for a signal reception device and the contents for a portable terminal, which correspond to the position ID which is included in the position information which is received by the signal reception section 104.

The signal distribution section 105, along with reading out from the signal destination information database 107 the signal destination information of the signal reception device which corresponds to the position ID which is included in the position information, based upon the signal destination information of the signal reception device, and dispatching contents for use by the signal reception device which has been read out by the read out section 103, also reads out from the signal destination information database 107 the signal destination information of the portable terminal which corresponds to the ID of the person who is visiting which is included in the position information, based upon the signal destination information of the portable terminal, and dispatches contents for use by the signal reception device which has been read out by the read out section 103.

With an information system of this type of structure, by the tag 70 being approached by the person who is visiting to within a region in which communication with the reader-writer 50 of FIG. 5 is possible, along with the ID of the person who is visiting which has been stored in the tag 70 being read out by the reader-writer 50, to dispatch it to the information distribution server 1 as position information, along with the reader-writer ID which has been set in the reader-writer 50 itself. And, along with contents being dispatched by the signal distribution section 105 of the information distribution server 1 to the signal reception device 80 that notify that a coupon as shown in FIG. 14A has been dispatched, contents consisting of an electronic coupon like that shown in FIG. 14B are dispatched to the portable telephone device 3 that is being carried by the person who is visiting.

In this manner, by dispatching contents which have relevance for either the case of a signal reception device or the case of a portable terminal, it becomes possible to impart a feeling of identification with the facility to a person who is visiting, and it accordingly becomes possible to enhance his level of amusement.

It should be understood that, in this embodiment, it is possible to enhance the amusement level for a person who is visiting and is shifting between reader-writers 50 which are provided in different places, by storing in advance contents which are different for each of the reader-writer IDs.

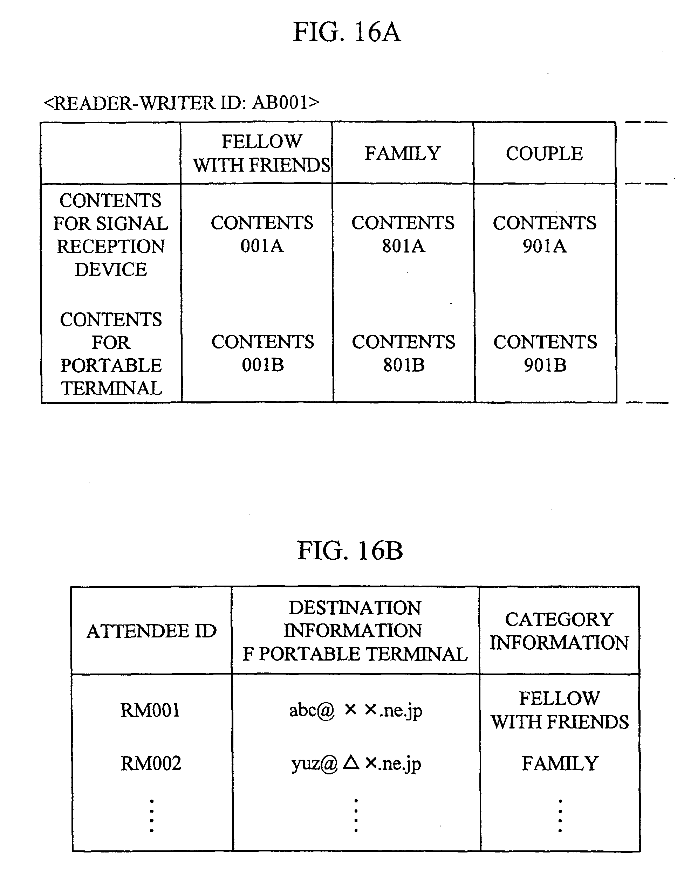

It should be understood that, in this third embodiment, category information giving the category for classification of the person who is visiting and who is carrying the portable terminal is set in the ID of the person who is visiting as shown in FIG. 16A, and is stored in the signal destination information database 107. And contents are stored in the contents database 109 for which distribution category information has been set in advance to the contents for a signal reception device and to the contents for a portable terminal, which specifies the category of the object of distribution. And it may also be arranged, if the information distribution server 1 reads out contents which correspond to a position ID which is included in the position information, for it to read out and to dispatch, based upon the category information which is included in the position information which is set to an ID of a person who is visiting, the contents for use by a signal reception device, and the contents for use by a portable terminal, for which distribution category information is set which corresponds to this category information. By doing this, it is possible to distribute contents according to the tastes and the preferences of the person who is visiting.

Furthermore, in this embodiment, to the reader-writer 50 and to the signal reception device 80 there is connected a contents selection device to which are provided an input device for selection of contents, a contents selection section which, if the reader-writer 50 has obtained an ID of a person who is visiting from the tag 70, outputs guide information to the signal reception device for prompting the selection of the contents, and a selection command notification section which, if a contents selection command for selection of contents has been inputted from the input device, dispatches this contents selection command to the information distribution server 1. Here, a mouse or a keyboard may be utilized as the input device. Furthermore, it will also be acceptable for the signal reception device to be of a touch screen type.

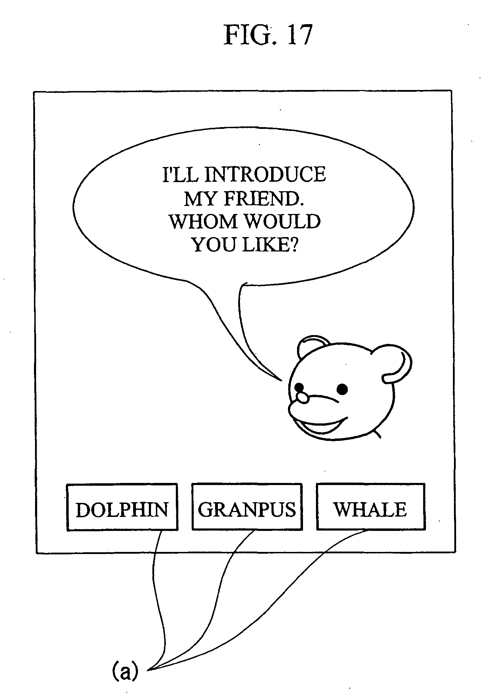

And, if the tag 70 has been approached by the person who is visiting to within a region in which communication with the reader-writer 50 is possible, then information which becomes a selection list for selection of contents is outputted by the contents selection section of the contents selection device, for example like that shown in FIG. 17 (the reference symbol (a)). And if the button "dolphin" from among this selection list is pushed by the person who is visiting, then the fact that "dolphin" has been selected is notified by the selection command notification section to the information distribution server 1. And the contents which correspond to "dolphin" are dispatched from the information distribution server 1 to the signal reception device and to the portable terminal.

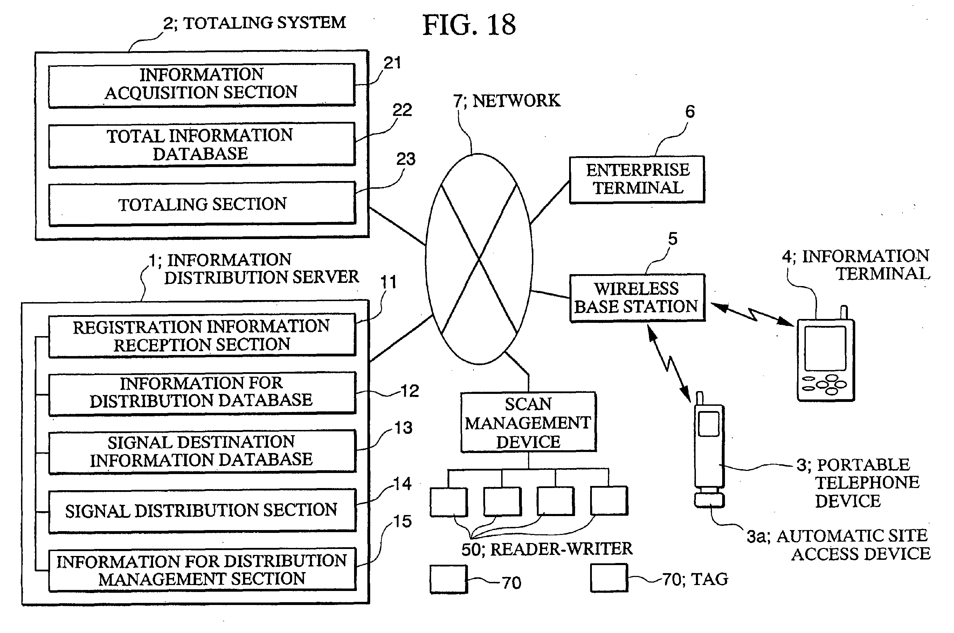

Next, an information distribution system according to a fourth embodiment will be explained. FIG. 18 is a schematic block diagram showing the structure of this information distribution system according to the fourth embodiment. In this figure, the same reference symbols are affixed to parts which correspond to parts in FIG. 1, and the portions whose functions differ from FIG. 1 will be explained.

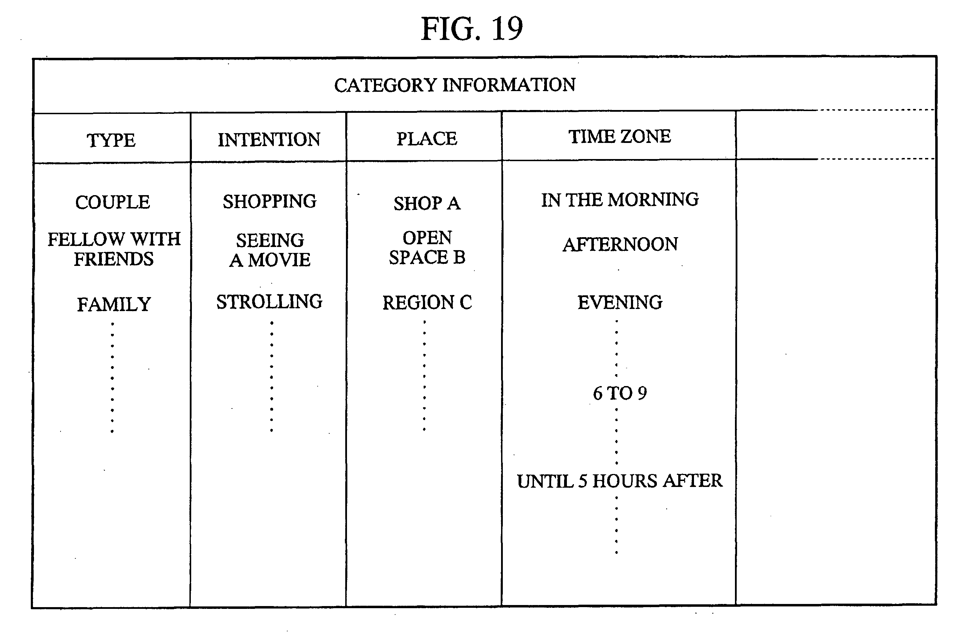

The category information which the registration information reception section 11 receives, as shown in FIG. 19, includes a property which specifies a property of the person who is visiting, an intention which specifies an intention in visiting the enterprise of the person who is visiting, a place which specifies a roaming destination of the person who is visiting, a time zone which specifies the time zone in which the person who is visiting is roaming, and the like, and this category information is stored in the signal destination database 13. It should be understood that here the term "property" corresponds to the property information of the second embodiment.

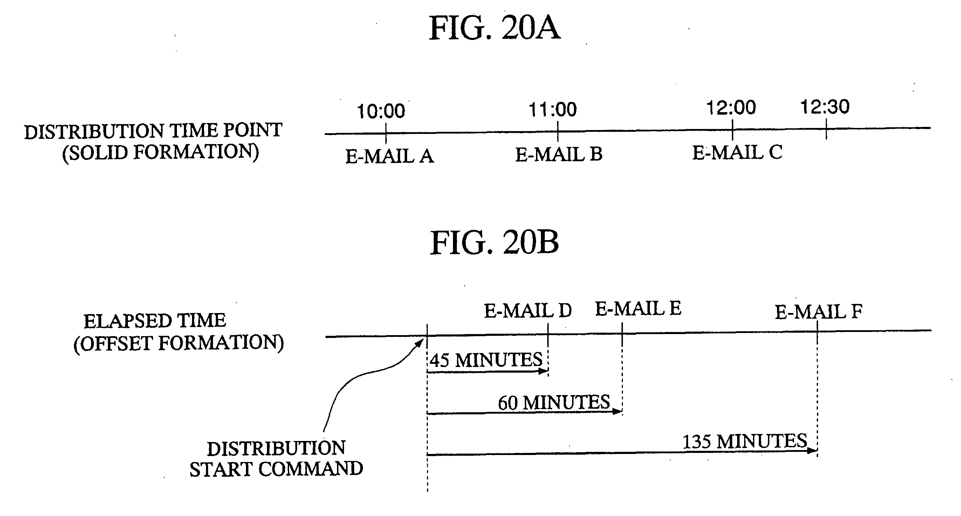

Along with the information for distribution database 12 storing the information for distribution for which a time for distribution has been set in advance, it also stores information for distribution for which a time has been set in advance as a time for distribution when it should be distributed, based upon the passage of time from the start of distribution to the portable terminal of information for distribution. This information distribution will now be explained in detail using FIG. 20A and FIG. 20B. As shown in this figure, while, for the information for distribution in the second embodiment, as shown in FIG. 20A, a distribution time point is set so that it is dispatched at a time instant which is set in advance (in the following, this will be termed a "solid formation"), on the other hand, in this embodiment, as shown in FIG. 20B, a time period from the start of distribution to the portable terminal which has been registered until the information for distribution is to be distributed is set in the information for distribution as an offset time period (in the following, this will be termed an "offset formation"). Here, as an example, information for distribution (electronic mails D through F) are shown in which the offset time periods of 45 minutes, 60 minutes, and 135 minutes have been set. It should be understood that this start of distribution may be later than when the signal destination information of the portable terminal has been registered upon the information distribution server 1; for example, the information distribution server 1 may determine upon a timing for the start of distribution based upon the time point at which the signal destination information has been registered upon the information distribution server 1, or it may determine upon a timing for the start of distribution based upon a dispatch start command which is dispatched from the portable terminal.

Furthermore, in the information for distribution which has been stored in the information for distribution database 12, apart from the offset time period, distribution category information is set in advance which specifies the category of the object for distribution. This distribution category information, for example, may include property, intention, place, time zone, etc..

When distributing the information for distribution, based upon the category information which is included in the registration information, the signal distribution section 14 distributes the information for distribution to the portable terminal for which has been set signal destination information for which category information is set which corresponds to the distribution category information which has been set in the information for distribution.

Furthermore, the signal distribution section 14 distributes the information for distribution to the portable terminal for which the signal destination information which is included in the registration information is set, based upon the offset time period which is set in the information for distribution which has been stored in the information for distribution database 12, and upon the passage of time from the distribution start command to the portable terminal of the information for distribution. In other words, the signal distribution section 14 distributes the information for distribution to the portable terminal which has signal distribution information for which the passage of time and the offset time period agree with one another, and also for which the category information and the distribution category information agree with one another.

A tag 70 is an IC tag, and it may be of a non contact type, of a contact type, or of a hybrid type. For example, this tag 70 may be a RFID (Radio Frequency Identification Tag), and, along with storing the ID of the person who is visiting, which is information for discriminating the person who is visiting, it performs communication with a reader-writer 50, and, along with dispatching the ID of the person who is visiting to the reader-writer 50, it stores a reader-writer ID of the reader-writer 50 which is dispatched from the reader-writer 50. The storing of this reader-writer ID is performed every time communication is performed with the reader-writer 50. These tags 70 are issued to each person who is visiting who attends within the compound business facility, and one is carried by each person who is visiting. This tag 70, for example, may be attached to the portable terminal, or to a medium such as an entry ticket or the like for entering the compound business facility. It should be understood that a plurality of the reader-writers 50 are provided, and an individual reader-writer ID is provided for each of the reader-writers 50. This reader-writer ID is dispatched from a scanner management device 51 to the information distribution server 1 as a position ID. By utilizing this position ID, it is possible to specify the place at which the user is utilizing the tag and has performed communication with the reader-writer 50.

Furthermore, this position ID is information for discriminating between the reader-writers 50, and it is possible to discriminate and to apprehend the position of each reader-writer 50 which has been provided within the compound business facility, according to this reader-writer ID. Due to this, it is possible to apprehend the position of the person who is visiting by apprehending the position ID of the reader-writer 50 which has detected the tag ID of the tag 70.

The reader-writer 50 is provided within a working area, and it obtains the ID of the person who is visiting by performing communication with the tag 70 which has approached the region in which communication is possible, and it dispatches the ID of the person who is visiting which it has obtained and the reader-writer ID which has been set to itself as position information to the scanner management device 51.

A scanner management device is connected to each of the reader-writers 50, and they dispatch the position information which is dispatched from the reader-writers 50 via the network 7 to the information distribution server 1.

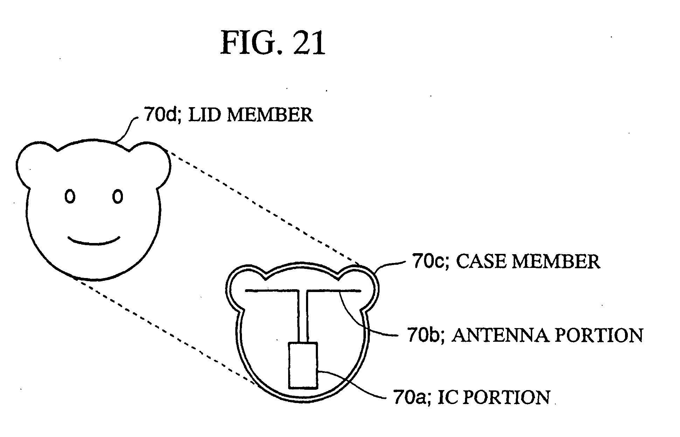

Furthermore the reader-writer 50, apart from reading in the ID of the person who is visiting from the tag 70, also is endowed with a function of dispatching data to the tag 70 and of storing it in the tag 70. It should be understood that a device other than the reader-writer 50 may be utilized, provided that it can read in the ID of the person who is visiting from the tag 70. Furthermore, it is acceptable to utilize some device other than the reader-writer 50, provided that it is endowed with the function of reading in the ID of the person who is visiting from the tag 70, and with the function of dispatching data to the tag 70 and storing it in the tag 70. Yet further, it would also be acceptable to provide the tag 70 inside a chip case in the form of a character, such as the one shown in FIG. 21, so that it could be carried by the user as a key holder or on a strap of a portable terminal. In this case, an IC portion 70a and an antenna portion 70b of the tag 70 are mold processed and fixed by resin within a case member 70c, and the case member 70c and a lid member 70d are attached together.

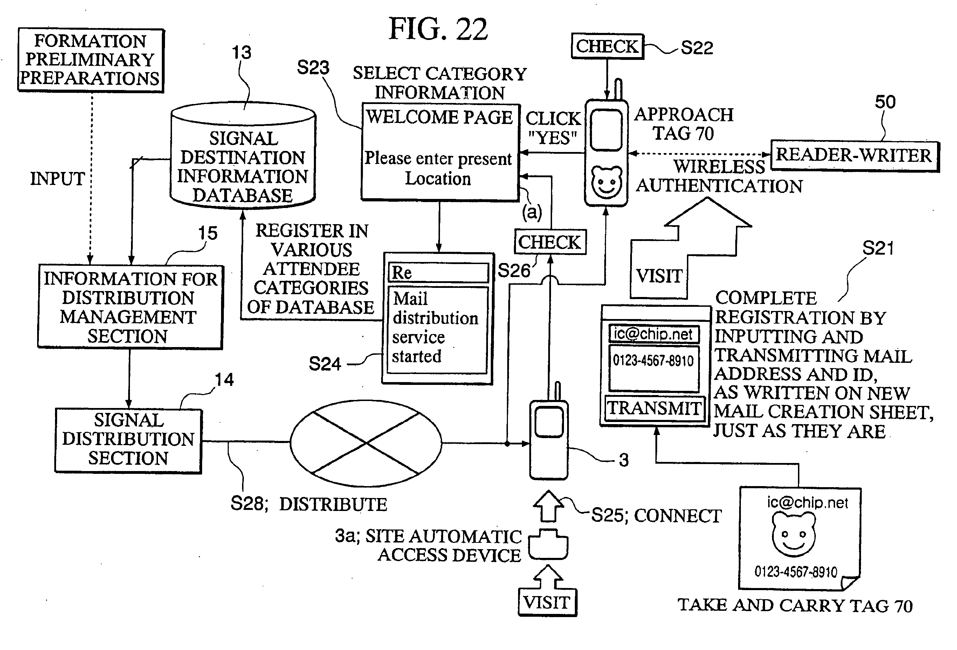

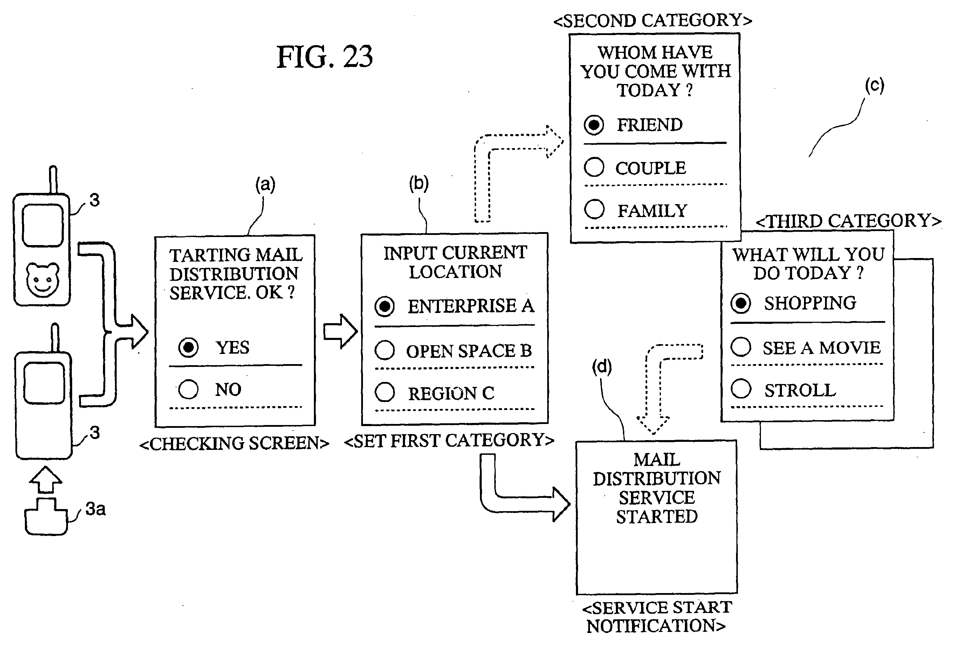

Next, the procedure for distributing information for distribution of this information distribution system of this embodiment will be explained using FIG. 22 and FIG. 23. FIG. 22 is a flow chart for explanation of the procedure for distributing the information for distribution, and FIG. 23 is a figure for explanation of the change over of the display screen of the portable telephone device 3. Here, distribution preparation of the information for distribution which has been entrusted for distribution from each enterprise within the compound business facility is performed in advance by an active formation function of the information for distribution management section 15, based upon the distribution time point and the time for distribution which have been ordered, and upon category information which specifies the object of distribution, and then this information is stored in the distribution DB 12.

If attendance registration is performed using a tag 70, the person who is visiting takes and carries the tag 70 which is distributed or sold at the periphery of the compound business facility. This tag 70 is mounted upon a frame upon which are written an electronic mail address for registration of the signal destination information of the portable terminal to the information distribution server 1, and the ID of the person who is visiting. And the person who is visiting dispatches the ID of the person who is visiting to the electronic mail address which is written upon the frame with the portable telephone device 3, and performs an attendance registration request. By doing this, the registration is performed by establishing a correspondence between the signal destination information and the ID of the person who is visiting within the information distribution server 1 (the step S21 of FIG. 22). And, after the signal destination information has been registered, the tag 70 is carried by the person who is visiting by being stuck to the front surface or to the rear surface of the portable telephone device 3 by the person who is visiting.

And if the person who is visiting goes to a location within the compound business facility and wants information related to the compound business facility, he approaches the portable telephone device 3 to which the tag 70 is stuck to within the communication region of the reader-writer 50. The reader-writer 50 performs communication with the tag 70 which has been brought near to within the region in which communication is possible and performs authentication processing, and, when the authentication has been completed, it obtains the ID of the person who is visiting from the tag 70, establishes a correspondence between the ID of the person who is visiting which has been obtained and the reader-writer ID which has been set in itself, and dispatches this via the scanner management device 51 and the network 7 to the information distribution server 1 as position information.

When the position information is dispatched, the registration information reception section 11 of the information distribution server 1 reads out the signal destination information which corresponds to the ID of the person who is visiting from the signal destination information DB 13, based upon the ID of the person who is visiting which is included in the position information. When the signal destination information is read out, the signal distribution section 14 dispatches contents for checking whether or not to start an information distribution service such as that shown by the reference symbol (a) in FIG. 23 to the terminal of the signal destination information which has been read out (in the step S22 of FIG. 22). And when "YES" is clicked by the user and an order is issued from the portable telephone device 3 for the start of information distribution, the signal distribution section 14 dispatches contents for setting the category information, as shown by the reference symbol (b) in FIG. 23 (in the step S23 of FIG. 22, and as per the reference symbol (b) in FIG. 23). At this time, in the category information, there may be set a plurality of category information such as first category, second category.... , as shown by the reference symbols (b) and (c) in FIG. 23. In this case, a correspondence is also established for the category information with regard to the information for distribution, and a plurality of items of distribution category information are set in advance.

And the category information is selected by the user, and, when the category information which has been selected from the portable telephone device 3 is dispatched, the signal distribution section 14 dispatches the contents of the service start check as shown by the reference symbol (d) in FIG. 23 (the step S24 of FIG. 22).

When performing attendance registration using the automatic site access device 3a, the person who is visiting carries the automatic access device 3a, and connects it to the data communication terminal of the portable telephone device 3 (in the step S25 of FIG. 22). And, after having accessed the welcome page, attendance registration is performed. Here, a check for the start of the mail distribution service is performed (in the step S26 of FIG. 22, and as shown by the reference symbol (a) in FIG. 23), and, after setting of the category information has been performed (in the step S23 of FIG. 23, and as shown by the reference symbol (b) in FIG. 23), the operation of the mail software of the automatic site access device 3a is started, the signal destination information of the electronic mail address and the device type information are dispatched from the portable telephone device 3 to the information distribution server 1 as reply information (for example, as mail), and are registered in the signal destination DB 13 as registration information (in the steps S23 and S24 of FIG. 22). And the contents of a service start check as shown by the reference symbol (d) in FIG. 23 are dispatched to the portable telephone device 3.

By performing this procedure for attendance registration, the signal destination information is registered in the signal destination DB 13 (in the step S27 of FIG. 22). And the signal distribution section 14 dispatches the information for distribution for which the category information, the distribution time point, and the time for distribution have been set in advance by the information for distribution management section 15 as electronic mail to the electronic mail address which is the signal destination information which has been stored in the signal destination DB 13, according to its automatic distribution function (in the step S28 of FIG. 22). By doing this, the distribution destination information is distributed as electronic mail according to the category information of the person who is visiting, based upon the passage of time from the time point which has been commanded or the time point at which the registration has been received and the category information of the person who is visiting.

Next the distribution of electronic mail in the step S28 of FIG. 22 will be explained in detail with the use of the figures.

### A) About the category information "place"

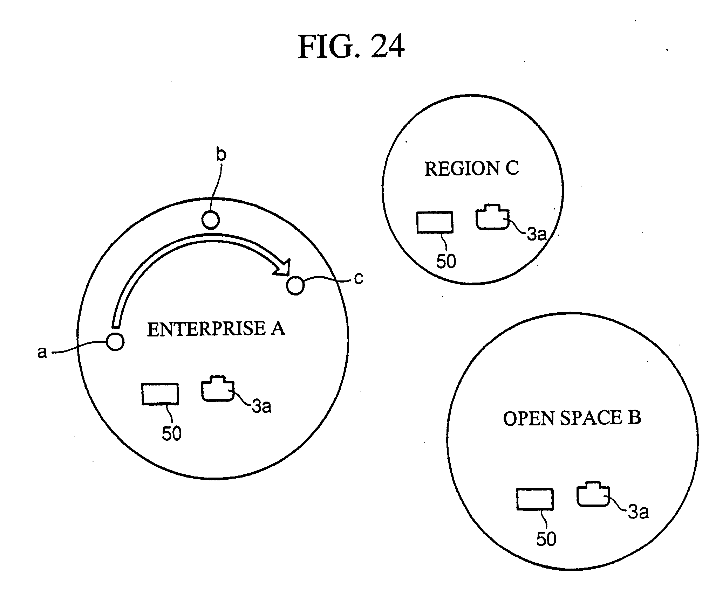

A) At the reference symbol (b) in FIG. 23, if category information about a place is set, the roaming range is determined in advance according to the contents of the information for distribution, and, within this roaming range, the information for distribution is distributed based upon the distribution time point, for a solid formation, and based upon the time for distribution, for an offset formation. The roaming range, for example, as shown in FIG. 24, if three types of place "enterprise A", "open space B", and "region C" are determined upon, is determined by the user from among these three types, as shown by the reference symbol (b) in FIG. 23. It should be understood that it may also be the case that the category information of "place" need not be selected by the user. For example, as shown in FIG. 24, an automatic site access device 3a may be set up within each roaming range for distributing information for distribution, which has been endowed with a function of dispatching place discrimination information for specifying this roaming range. And, if the user desires information for distribution related to this place, he goes to that place, connects the automatic site access device 3a to the portable telephone device 3, and performs attendance registration for information distribution. By doing this, the place discrimination information is notified to the information distribution server 1, and category information for the place is determined. Furthermore, in the same manner for the reader-writer 50, it is also possible to determine category information for the place by dispatching the position information to the information distribution server 1.

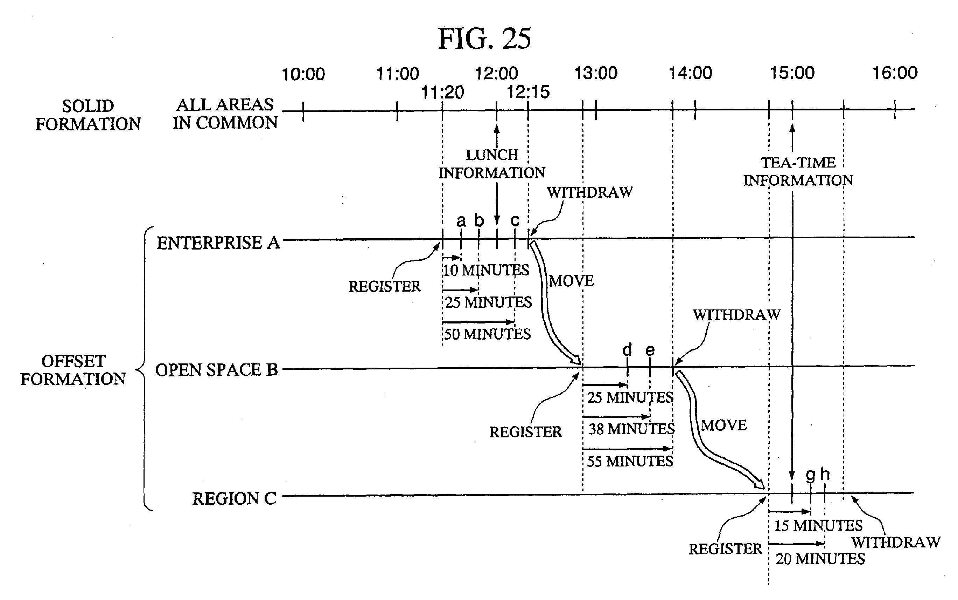

Next, using FIG. 25, the case will be explained in which, after the category information has been set to "place", electronic mail is dispatched to the portable telephone device 3. By the user bringing the portable telephone device 3 to which the tag 70 has been affixed near to the reader-writer 50 which is provided within the enterprise A at 11:20, his attendance registration is performed, and, when the distribution of the information for distribution has been started, the items of information for distribution which have been set for each of the distribution times 10 minutes, 25 minutes, and 50 minutes are respectively, according to the passage of time, distributed 10 minutes after, 25 minutes after, and 50 minutes after the time point of attendance registration (as shown by the reference symbols a, b, c, and d in FIG. 25). Furthermore, the lunch information for which the distribution time point is set by the solid formation to 12:00 is dispatched to the portable telephone device 3 at 12:00, rather than according to the passage of time from the start of information distribution to the portable telephone device 3. And, when the withdrawal time period which is set in advance by the offset formation arrives, the signal destination information of the user is cancelled, and is withdrawn. It should be understood that here, by "withdrawal", is meant that the signal destination information for the portable terminal is deleted from the signal destination information database 13. This withdrawal time period may be set in advance; or, alternatively, it may be arranged to withdraw at the time point when the final item of information for distribution has been set by the offset formation. Furthermore, before this withdrawal, it will also be acceptable for a registration at a "place" which has already been registered to be withdrawn, by the person who is visiting performing a new registration at another place. It is possible to distribute information exactly matched to each region by performing this withdrawal procedure. It should be understood that, for the categories which will be explained below as well, the withdrawal procedure is performed in the same manner at the time point that the withdrawal time period is reached, at the time point that the final item of information for distribution has been distributed, at the time point that a new registration has been performed, or the like.

And, after the person who is visiting has shifted to the open space B, when attendance registration at the open space B is performed, information for distribution for roaming within the open space B is distributed according to the passage of time (as shown by the reference symbols d, e, and f in FIG. 25). Furthermore, when the person who is visiting shifts to the region C and performs attendance registration, the information for distribution related to the region C is dispatched according to the passage of time from the attendance registration (as shown by the reference symbols g and h in FIG. 25). Here, tea-time information which has been set to 15:00 with a solid formation is dispatched to the portable telephone device 3 at 15:00, without any relationship to elapsed time. It should be understood that the information for distribution which has been set with a solid formation is dispatched in common to all of the portable terminals for which attendance registration is performed, without any dependence upon the category information of place. However, if a portable terminal is not registered as attending at the distribution time point, it cannot receive information for distribution which depends upon a solid formation.

For a case in which "place" has been set as this category information, the information for distribution is set in consideration of the time period for remaining in the intended place within roaming range and the time period for shifting between the intended places. For example, in a case in which the general goods shops a, b, and c of FIG. 24 are present, it is set in consideration of the time period to choose goods within each general goods shop, and the time period for shifting between the general goods shops. By doing this, the person who is visiting is able to roam at high efficiency within the roaming range, according to the information for distribution. Due to this, it is possible for him to enjoy himself while making good use of his free time in an efficient manner. Furthermore, since the traders of the compound business facility are able to provide roaming without any trouble within the facility by the persons who are visiting, thereby they are able to provide a facility of which the amusement level has been enhanced, and it becomes possible to impart a feeling of wishing to come to the facility again.

### B) About the category information "property"

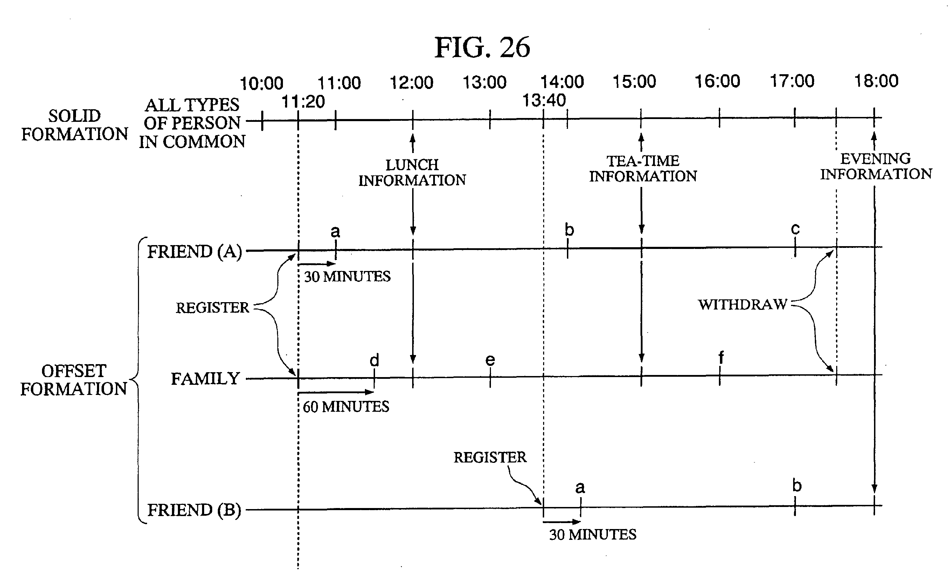

Next, in the setting of the first category of the reference symbol (b) in FIG. 23, the case in which "property" is set as the category information will be explained using FIG. 26. When a portable terminal for which "friend" is set for "property" and a portable terminal for which "family" is set enter within the same compound business facility, and attendance registration is performed at the same time using tags 70 or automatic site access devices 3a, then information for distribution for roaming attractions or general goods shops is distributed according to the passage of time to the portable terminal for which "friend" has been set (as shown by the reference symbols a, b, and c in FIG. 26). On the other hand, information related to a newly established park, or sale information for toys, is distributed according to the passage of time to the portable terminal for which "family" has been set, at a different timing to that for the portable terminal for which "friend" has been set.

Here, although the information for distribution which has been set by an offset formation is distributed to the portable terminal for which "friend" has been set and to the portable terminal for which "family" has been set at different time instants, the information for distribution which has been set by a solid formation is distributed at the same time instant.

In this manner, by setting a property in the category information, it is possible for roaming within the facility to be experienced according to the preferences or the tastes of the person who is visiting.

### C) About the category information "intention"

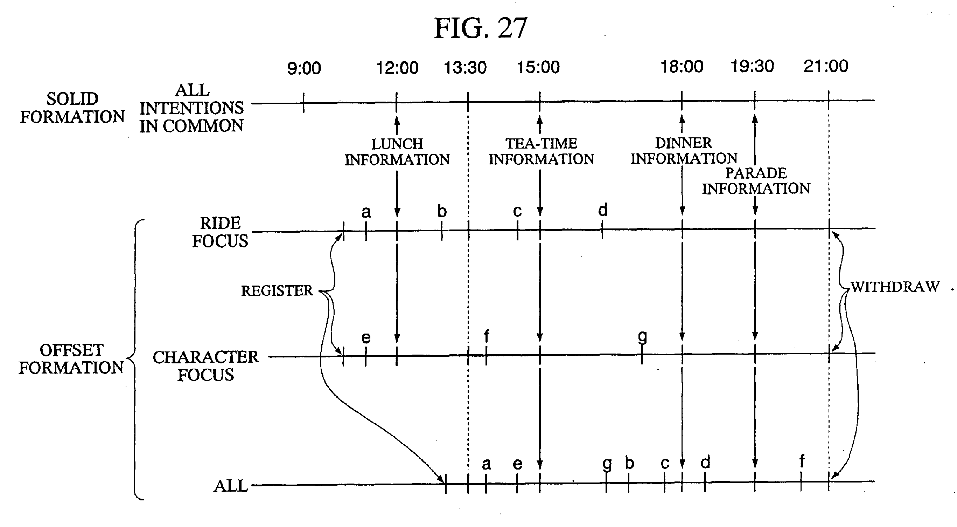

Next, in the setting of the first category of the reference symbol (b) in FIG. 23, the distribution of the information for distribution in the case in which "intention" is set as the category information will be explained using FIG. 27. When a portable terminal for which "ride focus" has been set for "intention" and a portable terminal for which "character focus" has been set enter within the same amusement park and perform attendance registration, information for distribution in which riding on a jet coaster or a Ferris wheel has been made the focus is distributed to the portable terminal for which "ride focus" has been set, and information for distribution which has been set based upon the time periods for riding upon the rides, or the time periods and the route for shifting between the various rides, is distributed according to the passage of time from the attendance registration (as shown by the reference symbols a, b, c, and d in FIG. 27). On the other hand, information related to character attractions, such as attractions in which characters perform dances or singing attractions in which characters sing or the like is distributed according to the passage of time to the portable terminal for which "character focus" has been set, at a different timing from that for the portable terminal for which "ride focus" has been set.

On the other hand, it will also be acceptable to provide category information of "all" which supposes that all the attractions within the amusement park are to be seen in order. In this case, the information for distribution for making a round at high efficiency within the precincts of the amusement park is set by utilizing an offset formation. It should be understood that, at this time, a registration reception period is provided in which it is possible to set the category information of "all", based upon the time period which is required for making a tour of all the attractions.

Here, although the information for distribution which has been set according to an offset formation is distributed to the portable terminals for which "ride focus" has been set and to the portable terminals for which "character focus" has been set at different time instants, the information for distribution which has been set according to a solid formation is distributed at the same time instant.

In this manner, by setting an intention in the category information, it is possible to offer a roaming route aimed at fulfilling the intentions of the person who is visiting who is attending the facility, and it becomes possible for a person who is visiting to fulfill his intentions without planning any roaming route by himself. Due to this, it is possible for the traders of the compound business facility to enhance the level of fun for the persons who are visiting.

### D) About the category information "time zone"

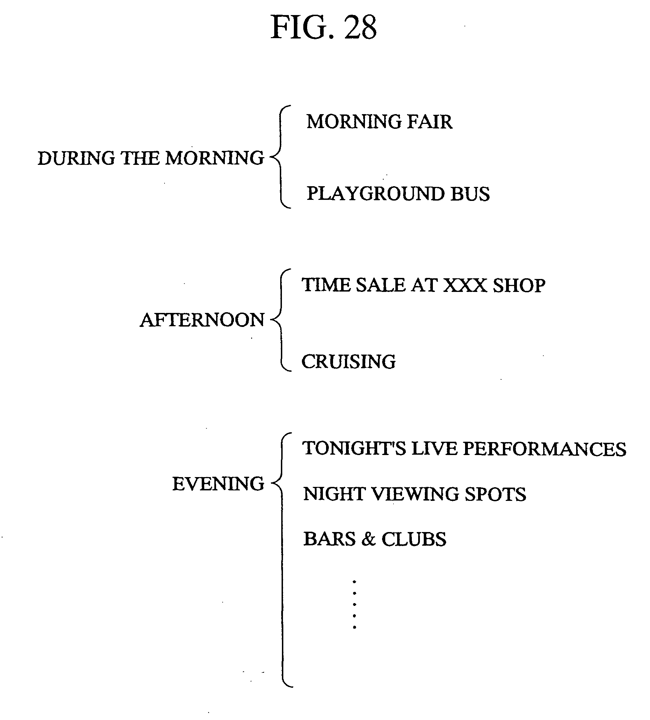

Next, in the setting of the first category of the reference symbol (b) in FIG. 23, the case in which "time zone" is set as the category information will be explained using FIG. 28. FIG. 28 is a figure for explanation of information which is distributed by the category "time zone". As shown in this figure, if the category information is "time zone", information regarding services which can be received within this compound business facility for each time zone is included in the information for distribution. And, for example, if a person who is visiting attends within the compound business facility during the daytime, and if he wants information related to business during the night-time within this compound business facility, then he dispatches a request for information to the information distribution server 1 designating "night-time" as "time zone" in the category information. By doing this, information related to services which can be received during the night-time, such as "tonight's live performances", "night viewing spots", "bars and clubs" and the like is dispatched from the information distribution server 1 to the portable terminal which has performed dispatch of the request for information for distribution.

Here, if the category information has been set for "time zone", it is desirable for the information for distribution to be distributed according to an offset formation, and for the time for distribution to be set to "0 minutes". Since by doing this it is possible for the information which is deemed to be necessary to be quickly transmitted to the person who is visiting, accordingly it becomes possible for the person who is visiting to apprehend in advance the services that can be received inany time zone, and to plan the details of his roaming by himself in advance. Furthermore, at this time, it would also be acceptable to distribute information for distribution which has been set with a solid formation.

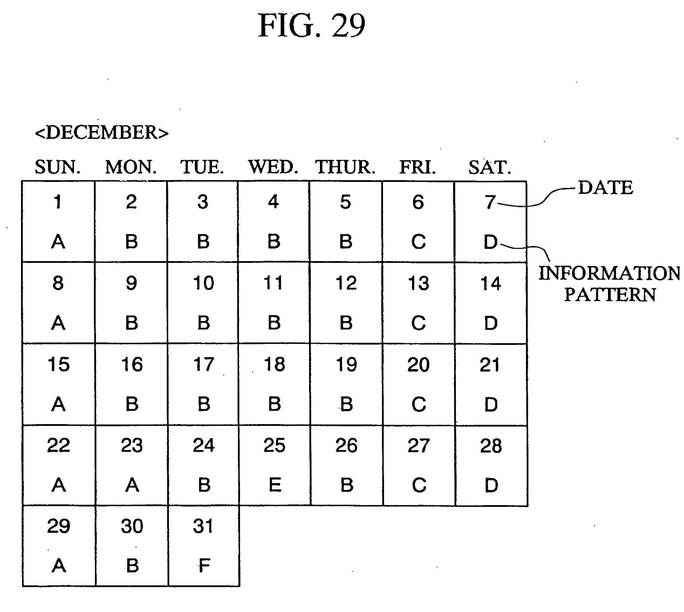

In the embodiment explained above, it would also be acceptable for it to be arranged to change the details of the information for distribution upon a specified day. For example, as shown in FIG. 29, an information pattern A could be set for Sunday, patterns B, C, and D could be set up for normal weekdays and for Friday and Saturday respectively, and information patterns E and F could be set up for days which are special such as Christmas or New Year's Eve or the like; and the information for distribution could be dispatched according to this information pattern.

It should be understood that, in the embodiment described above, it is possible to perform implementation by the method shown in the following, as a method for registering the signal destination information with the tag 70. Registration sequence A. (a) The personnel hand over an attendance form to which the tag 70 has been adhered to the person who is visiting. (b) The person who is visiting writes down his electronic mail address, which is one type of signal destination information, and the device type name of his portable terminal, which is device type information, both of which are items for entry upon the attendance form, and hands it over to the personnel. (c) The personnel establish a correspondence between the tag ID of the tag 70 which was adhered to the attendance form and the electronic mail address and the device type name of the portable terminal which have been written upon the attendance form, input it from an input device (not shown in the figures), and register it in the signal destination DB 13. And the tag 70 is peeled away from the attendance form, and is handed to the relevant person who is visiting. This tag ID becomes the ID of the person who is visiting.

### Registration sequence B.

(a) The person who is visiting inputs his electronic mail address, which is one type of signal destination information of his own portable terminal, and the device type name of his portable terminal, which constitutes device type information, to a tag issuing device. (b) The tag issuing device temporarily stores the electronic mail address and the device type name which have been inputted, and ejects a tag 70, which it has been storing internally, through a delivery chute. (c) The person who is visiting receives the tag 70 which has been ejected through the delivery chute. (d) The tag issuing device takes the tag ID of the tag 70 which has been ejected as the ID of the person who is visiting, establishes a correspondence between it and the electronic mail address and the device type name which it has temporarily stored, and stores it in the signal destination DB 13.

It should be understood that, with the registration sequence B, it would also be acceptable to integrate the tag 70 which is issued with a site entry ticket for the facility. By doing this, it becomes possible for the person who is visiting to come into possession of the tag 70, without being aware of the existence of the tag 70.

It should be understood that it would also be acceptable to utilize the totaling system 2 of FIG. 8 in the information distribution system of FIG. 18.

It should be understood that although, in the embodiment explained above, the explanation was made in terms of the case of the information distribution system 10 and the totaling system 2 being provided within a compound business facility, alternatively, it would also be acceptable to arrange to provide the information distribution system 10 and the totaling system 2 to some area which is not in a compound business facility, but rather to within a facility of which the range is limited, provided that it was possible to distribute information which is related to guiding within said facility. For example, it would be possible to utilize the present invention, for example, in a event space such as a shopping mall, a building, an amusement park, a museum, an art gallery, an exhibition or the like, or within a compound or an independent facility such as a theme park, and to distribute guide information or the like within the facility.

Furthermore, it is acceptable for what is meant by a compound or an independent facility not to be an actual structure, and, accordingly the present invention may also be utilized outdoors for any area or place, provided that it is capable of distributing information for distribution according to that area or place.

Furthermore, it is also acceptable to utilize wireless in a portion of the connection between the reader-writer 50 and the computer 40. By doing this, it is possible to dispose the reader-writer in any desired position, according to requirements.

Furthermore, it would also be acceptable to perform the information distribution procedure by recording a program for implementing the functions of the management console section 101, the locator engine 102, and the action rules 106 of FIG. 1, the functions of the registration information reception section 11, the signal distribution section 14, and the information for distribution management section 15 of the information server 1 of FIG. 8, and the functions of the information acquisition section 21 and the totaling section 23 of the totaling system 2 of FIG. 8, upon a recording medium which is capable of being read in by a computer, and by reading this program which has been recorded upon the recording medium into a computer system, and executing it. It should be understood that here, "computer system", is also meant to include an OS or hardware such as peripheral devices.

Furthermore, the term "computer system" is also intended, if the WWW system is being utilized, to include a home page provision environment (or a display environment).

Yet further, the term "recording medium which can be read in by a computer" refers to a transportable medium like a flexible disk, an opto-magnetic disk, a ROM, a CD-ROM or the like, or to a storage device such as a hard disk or the like which is housed within a computer system. Furthermore, the term "recording medium which can be read in by a computer" also includes a device which automatically stores a program for a short time period, like a communication line when dispatching a program via a communication circuit such as a network such as the internet or the like or a telephone circuit or the like, or a device which temporarily stores a program, such as, in this case, a volatile memory within a computer system which acts as a server or a client. Furthermore, the above described program may also be one for implementing a portion of the function described above; and, yet further, it may also be one which can implement the above described function in combination with a program which is already recorded in a computer system.

In the above, embodiments of this invention have been described in detail with reference to the figures, but its concrete structure is not to be considered as being limited to these embodiments; it also may include various other arrangements, as long as they do not depart from the gist of the present invention.

### INDUSTRIAL APPLICABILITY

As has been explained above, since, according to the present invention, it is arranged to receive the ID of the person who is visiting and the position ID which are dispatched from the device for obtaining the ID of persons who are visiting as position information, to read out contents from said contents database which correspond to the position ID which is included in the position information, and to dispatch the contents based upon the signal destination information, which is information for specifying the portable terminal which is to become the object of distribution of the contents, accordingly the benefit is obtained that it is possible to distribute information which corresponds to the place where the person who is visiting is located individually to the person who is visiting. Furthermore, the person who is visiting can to use and deal with it simply, and it is possible for him to have a feeling of identification with the enterprises and with the area.

Furthermore since, according to the present invention, it is arranged to read out contents corresponding to the position ID from the contents database, and to distribute these contents to the signal reception device which corresponds to the position ID which is included in the position information, accordingly the benefit is obtained that it is possible to distribute contents which correspond to that place to a person who is visiting and is not carrying a portable terminal or the like.

Furthermore since, according to the present invention, it is arranged that the contents which are dispatched to the side of the signal reception device and the contents which are dispatched to the portable terminal side are contents which have mutual relevance, accordingly, even if (undesirably) the person who is visiting shifts from the signal reception device to a distant place so that it has become impossible for him to peruse the contents which have been outputted to the signal reception device, nevertheless the person who is visiting is able to peruse the contents which are necessary using his portable terminal, even if he shifts from the signal reception device to a distant place, since contents which have relevance are being dispatched to the side of the portable terminal. Furthermore, it is possible to impart a feeling of identification with the facility to a person who is visiting by dispatching contents which have relevance to the signal reception device and to his own portable terminal, and thereby to enhance his level of amusement.

Furthermore since, according to the present invention, it is arranged to perform signal reception while establishing a correspondence between the utilization information and the position information, accordingly the benefit is obtained that it is possible to detect from the user profile database whether or not a service is already being utilized, based upon the contents of the utilization information and the position information which have been received, and, if the service is already being utilized, it is arranged not to dispatch said contents. By doing this, the benefit is obtained that it is possible to prevent distribution of contents of which the content overlaps to a person who is visiting the facility and who is already using a service.

Furthermore since, according to the present invention, it is arranged for the contents reading out means to read out contents from the contents database corresponding to the history of position information which is stored in the user profile database, based upon the action rules for determining the contents which are to be distributed according to the history of position information, accordingly it is possible to distribute contents which continue on from contents which have been dispatched previously, and, by doing this, it is possible for the person who is visiting to enjoy roaming the facility in company and to divert himself while maintaining a conversation with a character or the like. Furthermore, it is possible to perform communication with the facility via the character or the like, and by doing this it is possible to enjoy a feeling of identification with the facility.

Furthermore since, according to the present invention, it is possible to dispatch separate contents to the signal reception device and to the portable terminal, accordingly the benefit is obtained that, by dispatching contents in which the amount of data is high to the signal reception device, while dispatching contents in which the amount of data is low to the portable terminal, it is possible to dispatch the contents while reducing the load upon the devices on the reception side.

## Claims

1. An information distribution server which is used in an information distribution system which comprises a device for obtaining the ID of a person who is visiting, which obtains an ID of the person who is visiting, which is information for discriminating the person who is visiting, and appends a position ID which is set to itself to the ID of the person who is visiting which has been obtained and dispatches it, and the information distribution server which is connected to said device for obtaining the ID of a person who is visiting, **characterized by** comprising:
a contents database which stores contents in correspondence to position ID;
a signal destination information database which establishes a correspondence between signal destination information, which is information for specifying a portable terminal which is to become the object of distribution of said contents, and said ID of the person who is visiting, and stores it as registration information;
a signal reception means which receives as position information said ID of the person who is visiting and said position ID which are dispatched from said device for obtaining the ID of a person who is visiting;
a contents reading out means which reads out contents from said contents database which correspond to the position ID which is included in said position information which said signal reception means receives; and
a distribution means which reads out from a signal destination information database signal destination information which corresponds to said ID of the person who is visiting which is included in said position information, and dispatches said contents which have been read out by said contents reading out means based upon said signal destination information which has been read out.

2. An information distribution server in an information distribution system which comprises a device for obtaining the ID of a person who is visiting, which obtains an ID of the person who is visiting, which is information for discriminating the person who is visiting, and appends a position ID which is set to itself to the ID of the person who is visiting which has been obtained and dispatches it, a signal reception device which is provided within one or a plurality of enterprises for receiving contents and outputting them, and the information distribution server which distributes said contents, **characterized by** comprising:
a contents database which stores contents in correspondence to position ID;
a signal destination information database which establishes a correspondence between signal destination information, which is information for specifying said signal reception device which is to become the object of distribution of said contents, and said position ID, and stores it;
a signal reception means which receives as position information said ID of the person who is visiting and said position ID which are dispatched from said device for obtaining the ID of a person who is visiting;
a contents reading out means which reads out contents from said contents database which correspond to the position ID which is included in said position information which said signal reception means receives; and
a distribution means which reads out from a signal destination information database signal destination information which corresponds to said position ID which is included in said position information, and dispatches said contents which have been read out by said contents reading out means based upon said signal destination information which has been read out.

3. An information distribution server in an information distribution system which comprises a portable terminal which is carried by a person who is visiting, a device for obtaining the ID of a person who is visiting, which obtains an ID of the person who is visiting, which is said information for discriminating the person who is visiting, and appends a position ID which is set to itself to the ID of the person who is visiting which has been obtained and dispatches it, a signal reception device which is provided within one or a plurality of enterprises and which receives contents and outputs them, and the information distribution server which distributes said contents, **characterized by** comprising:
a contents database which stores, in correspondence to said position ID, contents for use by a signal reception device, for dispatch to said signal reception device, and contents for use by a portable terminal, for dispatch to said portable terminal, which have relevance relative to said contents for use by a signal reception device;
a signal destination information database which, along with establishing a correspondence between signal destination information of a signal reception device, which is information for specifying said signal reception device which is to become the object of distribution of said contents, and said position ID, and storing it, also establishes a correspondence between signal destination information of a portable terminal, which is information for specifying said portable terminal which is to become the object of distribution of said contents, and said ID of the person who is visiting, and stores it;
a signal reception means which receives as position information said ID of the person who is visiting and said position ID which are dispatched from said device for obtaining the ID of a person who is visiting; and
a means for reading out contents, which reads out from said contents database contents for use by a signal reception device and contents for use by a portable terminal which correspond to the position ID which is included in said position information which said signal reception means receives; and
a distribution means which, along with reading out from a signal destination information database signal destination information of a signal reception device which corresponds to said position ID which is included in said position information, and dispatching said contents for use by a signal reception device which have been read out by said contents reading out means based upon said signal destination information of said signal reception device which has been read out, also reads out from a signal destination information database signal destination information of a portable terminal which corresponds to said ID of the person who is visiting which is included in said position information, and dispatches said contents for use by a portable terminal which have been read out by said contents reading out means based upon said signal destination information of said portable terminal which has been read out.

4. An information distribution server as described in any one of Claim 1 through Claim 3, **characterized in that**:
category information which specifies a category of the person who is visiting and is carrying said portable terminal is set in said ID of the person who is visiting;
distribution category information is further set in advance in said contents which designates a category of the object of distribution; and
said distribution means, when distributing said contents, distributes information for distribution to the portable terminal for which has been set signal destination information for which category information is set which corresponds to the distribution category information which has been set in said information for distribution.

5. An information distribution server which is used in an information distribution system which comprises a device for obtaining the ID of a person who is visiting, which obtains an ID of the person who is visiting, which is information for discriminating the person who is visiting, and the information distribution server which is connected to said device for obtaining the ID of a person who is visiting, **characterized by** comprising:
a contents database which stores contents for which distribution category information which designates a category of the object for distribution has been set in advance;
a signal destination information database which establishes a correspondence between signal destination information, which is information for specifying a portable terminal which is carried by the person who is visiting and is to become the object of distribution of said contents, category information which specifies a category of the person who is visiting and is carrying said portable terminal, and said ID of the person who is visiting, and stores it;
a signal reception means which, if a recording medium upon which said ID of the person who is visiting is stored is approached by said person who is visiting to within a region in which reading in by said device for obtaining the ID of a person who is visiting is possible, receives from said device for obtaining the ID of a person who is visiting the ID of the person who is visiting which is obtained by said device for obtaining the ID of a person who is visiting;
a contents reading out means which reads out signal destination information and category information which correspond to the ID of the person who is visiting which is received by said signal reception means, and reads out contents from said contents database in which distribution category information has been set which corresponds to the category information which has been read out; and
a distribution means which dispatches said contents which have been read out to the portable terminal for which said signal destination information which has been read out is set.

6. An information distribution server as described in any one of Claim 1 through Claim 5, **characterized by** comprising:
a user profile database which stores position information which said signal reception means receives; and
a management console means which receives information which indicates that a specified service within a facility has been utilized, and an ID of a person who is visiting and has utilized said service, via said signal reception means as utilization information, and stores said utilization information in a user profile database in correspondence to position information, based upon said ID of the person who is visiting;
and in that said management console means further, when it has received position information, detects from said user profile database whether or not a service is already being utilized, based upon said position information which it has received, and, if a service is already being utilized, performs control so as not to dispatch said contents.

7. An information distribution server in an information distribution system in which are provided a plurality of said devices for obtaining the ID of a person who is visiting, and an information distribution server which distributes contents, **characterized in that**:
said information distribution server is the information distribution server of any one of Claim 1 through Claim 6; and
said contents reading out means reads out contents from said contents database which correspond to a history of position information which is stored in said user profile database, based upon an action rule for determining contents to be distributed according to a profile of position information.

8. An information distribution server as described in Claim 7, **characterized in that**:
in the position information which is dispatched from the device for obtaining the ID of a person who is visiting, there is included time instant information which indicates the time instant at which said ID of the person who is visiting has been obtained; and
said contents reading out means reads out contents from said contents database corresponding to a history of position information which is stored in said user profile database, based upon an action rule for determining contents to be distributed according to a history of position information and the present time instant, or an action rule for determining contents to be distributed according to the passage of time from a time instant that an ID of a person who is visiting has been registered until the present time instant, and said position information.

9. An information distribution server as described in any one of Claim 1 through Claim 8, **characterized in that** said contents is information for performing guiding within a facility.

10. An information distribution server as described in any one of Claim 1 through Claim 9, **characterized in that** said contents is information which can be transferred electronically.

11. An information distribution server as described in Claim 10, **characterized in that** said information which can be transferred electronically includes at least one of amusement information, a moving image, a game, a program, an electronic coupon, and a ticket.

12. A recording medium which is used in an information distribution system as described in Claim 1 through Claim 11, and upon which is stored the ID of a person who is visiting, **characterized in that**:
said recording medium provides the ID of the person who is visiting to said device for obtaining the ID of a person who is visiting.

13. A recording medium as described in Claim 12, **characterized in that** said recording medium is an RFID tag.

14. An information distribution method for an information distribution system which comprises a device for obtaining the ID of a person who is visiting, which obtains an ID of the person who is visiting, which is information for discriminating the person who is visiting, and appends a position ID which is set to itself to the ID of the person who is visiting which has been obtained and dispatches it, and the information distribution server which is connected to said device for obtaining the ID of a person who is visiting, **characterized in that**:
said ID of the person who is visiting and said position ID which are dispatched from said device for obtaining the ID of a person who is visiting are received as position information;
contents, which correspond to the position ID which is included in said position information which is received, are read out from a contents database in which contents are stored in correspondence to position ID; and
signal destination information which corresponds to said' ID of the person who is visiting which is included in said position information is read out from a signal destination information database, and said contents which have been read out are dispatched to the signal destination information which has been read out.

15. An information distribution method for an information distribution system which comprises a device for obtaining the ID of a person who is visiting, which obtains an ID of the person who is visiting, which is information for discriminating the person who is visiting, and appends a position ID which is set to itself to the ID of the person who is visiting which has been obtained and dispatches it, a signal reception device which is provided within one or a plurality of enterprises and which receives contents and outputs them, and the information distribution server which distributes said contents, **characterized in that**:
said ID of the person who is visiting and said position ID which are dispatched from said device for obtaining the ID of a person who is visiting are received as position information and a history of position information is created;
contents, which correspond to said history of position information which has been created, are read out from a contents database, based upon an action rule for determining contents which are to be distributed according to a profile of said position information; and
signal destination information, which corresponds to said ID of the person who is visiting which is included in said position information, is read out from a signal destination information database which stores signal destination information, which is information for specifying said signal reception device, and the contents which have been read out are dispatched to the signal destination information which has been read out.

16. A recording medium which can be read in by a computer, on which is recorded an information distribution program for an information distribution system which comprises a device for obtaining the ID of a person who is visiting, which obtains an ID of the person who is visiting, which is information for discriminating the person who is visiting, and appends a position ID which is set to itself to the ID of the person who is visiting which has been obtained and dispatches it, and an information distribution server which is connected to said device for obtaining the ID of a person who is visiting, for causing a computer to execute:
a receiving step of receiving said ID of the person who is visiting and said position ID which are dispatched from said device for obtaining the ID of a person who is visiting as position information;
a step of reading out contents, which correspond to the position ID which is included in said position information which has been received, from a contents database; and
a step of reading out signal destination information which corresponds to said ID of the person who is visiting which is included in said position information from a signal destination information database, and dispatching said contents which have been read out to the signal destination information which has been read out.

17. A recording medium on which is recorded an information distribution program for an information distribution system which comprises a device for obtaining the ID of a person who is visiting, which obtains an ID of the person who is visiting, which is information for discriminating the person who is visiting, and appends a position ID which is set to itself to the ID of the person who is visiting which has been obtained and dispatches it, a signal reception device which is provided within one or a plurality of enterprises and which receives contents and outputs them, and an information distribution server which distributes said contents, for causing a computer to execute:
a step of receiving said ID of the person who is visiting and said position ID which are dispatched from said device for obtaining the ID of a person who is visiting as position information, and of creating a history of position information;
a step of reading out contents, which correspond to said history of position information which has been created, from a contents database, based upon an action rule for determining contents which are to be distributed according to a history of said position information; and
a step of reading out signal destination information, which corresponds to said ID of the person who is visiting which is included in said position information, from a signal destination information database, and of dispatching the contents which have been read out to the signal destination information which has been read out.

18. An information distribution program for an information distribution system which comprises a device for obtaining the ID of a person who is visiting, which obtains an ID of the person who is visiting, which is information for discriminating the person who is visiting, and appends a position ID which is set to itself to the ID of the person who is visiting which has been obtained and dispatches it, and an information distribution server which is connected to said device for obtaining the ID of a person who is visiting, for causing a computer to execute:
a receiving step of receiving said ID of the person who is visiting and said position ID which are dispatched from said device for obtaining the ID of a person who is visiting as position information;
a step of reading out contents, which correspond to the position ID which is included in said position information which has been received, from a contents database; and
a step of reading out signal destination information which corresponds to said ID of the person who is visiting which is included in said position information from a signal destination information database, and dispatching said contents which have been read out to the signal destination information which has been read out.

19. An information distribution program for an information distribution system which comprises a device for obtaining the ID of a person who is visiting, which obtains an ID of the person who is visiting, which is information for discriminating the person who is visiting, and appends a position ID which is set to itself to the ID of the person who is visiting which has been obtained and dispatches it, a signal reception device which is provided within one or a plurality of enterprises and which receives contents and outputs them, and an information distribution server which distributes said contents, for causing a computer to execute:
a step of receiving said ID of the person who is visiting and said position ID which are dispatched from said device for obtaining the ID of a person who is visiting as position information, and of creating a history of position information;
a step of reading out contents, which correspond to said history of position information which has been created, from a contents database, based upon an action rule for determining contents which are to be distributed according to a history of said position information; and
a step of reading out signal destination information, which corresponds to said ID of the person who is visiting which is included in said position information, from a signal destination information database, and of dispatching the contents which have been read out to the signal destination information which has been read out.
